# EUROPEAN PATENT SPECIFICATION

(11) **EP 3 025 541 B1**
(45) Date of publication and mention of the grant of the patent: **30.08.2023**
(21) Application number: 14741963.4
(22) Date of filing: 08.07.2014
(51) Int. Cl.: H04W 24/10, H04W 76/18, H04W 24/02, H04W 24/04

(54) **COMMUNICATION SYSTEM**
KOMMUNIKATIONSSYSTEM
SYSTÈME DE COMMUNICATION

(30) Priority: 23.07.2013 GB 201313136
(43) Date of publication of application: 01.06.2016
(73) Proprietor: NEC Corporation, Tokyo 108-8001 (JP)
(72) Inventor: CHEN, Yuhua, Tokyo 108-8001 (JP)
(74) Representative: MacDougall, Alan John Shaw
(86) International application number: PCT/JP2014/068649
(87) International publication number: WO 2015/012137

(56) References cited:
- WO-A1-2013/045537
- WO-A1-2013/065995
- KR-A- 20120 115 953
- MEDIATEK INC: "MDT Open Issues Resolutions", 3GPP DRAFT; 37320_CR0051_(REL-11)_R2-125303, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. New Orleans, USA; 20121112 - 20121116 3 November 2012 (2012-11-03), XP050667043, Retrieved from the Internet: URL:http://www.3gpp.org/ftp/tsg_ran/WG2_RL 2/TSGR2_80/Docs/ [retrieved on 2012-11-03]

## Description

### Technical Field

The present invention relates to a communication system. The invention has particular, but not exclusive, relevance to establishing a radio connection in Long Term Evolution (LTE) systems as currently defined in associated 3^{rd} Generation Partnership Project (3GPP) standards documentation.

### Background Art

A communication system operating according to the LTE standards typically comprises an Evolved Universal Terrestrial Radio Access Network (E-UTRAN) and an Evolved Packet Core (EPC) network. A base station (eNB) of the E-UTRAN provides User Equipment (UE), such as mobile telephones, access to the core network (and hence to other user equipment or other network nodes) via one or more of the base station's cells.

Communication between the mobile telephones and the base station is controlled using a Radio Resource Control (RRC) protocol as defined in 3GPP TS 36.331 V11.4.0. RRC handles the control plane signalling of Layer 3 between mobile telephones and the radio access network, and includes, amongst other things, functions for broadcasting system information, paging, connection establishment and release, radio bearer establishment, reconfiguration and release, mobility procedures, and power control.

At any given time, mobile telephones may operate either in an `RRC idle mode' (in which no data communication takes place) or an `RRC connected mode' (in which data communication may take place between the mobile telephone and its serving base station).

As mobile telephones operating in the RRC connected mode move around in the area covered by the communication system, they are handed over from one cell (i.e. operated by a base station) to another cell (operated by the same or a different base station), depending on signal conditions and other requirements, such as requested quality of service, the type of service used, overall system load, and the like. A trigger for handing over a mobile telephone to a new cell may be based on measurements of the cells performed by the particular mobile telephone. The type of triggers and the related measurements to be performed by mobile telephones are detailed in section 5.5.4 of the 3GPP TS 36.331 standard. In summary, such triggers may generally relate to an event when the mobile telephone's serving cell (or a neighbouring cell) becomes better (or becomes worse) than either a pre-defined threshold or a pre-determined offset value. Further details of the overall mobility sequence are described in section 10.1.2 of the 3GPP TS 36.300 V11.6.0 standard, which describes the configuration of measurements by the base station and the subsequent triggering of handover.

On the other hand, whilst in the RRC idle mode, mobile telephones are programmed to select a 'serving' cell, having a good quality signal, to camp on so that when new data is to be transmitted to/from these mobile telephones, they can benefit from favourable signal conditions. In the event that an idle mobile telephone detects a new cell with better signal quality than the current serving cell, e.g. due to the mobile telephone changing its location, the mobile telephone can perform a so-called cell reselection procedure (i.e. a sort of handover for idle user equipment). However, an idle mode mobile telephone does not inform the network about the selected new cell as long as this cell is within the same 'tracking area' (i.e. a larger geographic area comprising a pre-defined set of cells), because the radio network transmits system information and UE specific paging messages within the whole tracking area thus making it possible to initiate communication to/from the mobile telephone regardless of the current cell it camps on. Further details of the cell reselection procedure are disclosed in the 3GPP TS 36.304 V 11.4.0 standard.

In order to benefit from the lowest energy consumption and to free up valuable system resources, the mobile telephones return to the RRC idle mode whenever possible. The base station controls the transition between the various operating modes for each mobile telephone within its cell(s). Since the setting up and termination of an RRC connection between the base station and the mobile telephone requires exchanging of signalling messages and hence utilises valuable system resources, and also takes some time to complete, the transition from connected to idle mode is allowed under specific circumstances as defined in the 3GPP TS 36.331 standard. For example, the serving base station might instruct a mobile telephone to enter the RRC idle mode only after it has confirmed that there is no more data to be transmitted to/from the particular mobile telephone (e.g. both uplink and downlink buffers are empty).

When an idle mobile telephone has data to send again (or when an active mobile telephone enters a cell of the base station for the first time), in order to be allocated communication resources it initiates a so called RRC connection establishment procedure by sending an appropriately formatted RRC connection request message to the base station. However, before communicating RRC messages (or any other data), the mobile telephone needs to perform a so called Random Access Procedure with the base station to ensure that the lower layers, and in particular the Media Access Control (MAC) layer, are set up for communication with this base station.

The Random Access Procedure includes the mobile telephone sending to the base station a Random Access Preamble (a predefined pattern of bits), which facilitates synchronising the transceivers of the base station and the mobile telephone. The base station responds to the Random Access Preamble by sending a Random Access Response, after which scheduled transmission, e.g. RRC signalling, may be carried out between the mobile telephone and the base station using the service provided by the underlying MAC layer.

Since the base station only designates certain time slots that are available for all user equipment within its coverage area and it does not assign a UE specific time slot for sending the Random Access Preamble during initial access (although dedicated resource allocation is possible during handover), more than one mobile telephone may try to initiate respective Random Access Procedures at the same time, which may result in at least one of the mobile telephones being unable to proceed to the next phase of the procedure. However, since the Random Access Response is expected to be sent by the base station within a given time period following the transmission of the Random Access Preamble, failure to receive such a response (or receiving an incorrect response) at the mobile telephone may be indicative of concurrent communications by multiple user equipment. Therefore, the mobile telephone is configured to re-send the Random Access Preamble after a predefined time has passed after each failed attempt. The number of allowed attempts may be limited and once this predefined limit is reached the MAC layer may be reset, e.g. to avoid unnecessary disruption to other mobile telephones due to frequent re-transmission of the Random Access Preamble.

Since communications relating to the MAC layer (e.g. the Random Access Procedure) and/or the operating state of the MAC layer (e.g. whether it has been reset) are transparent for the RRC layer, the RRC layer is unable to determine the cause of not receiving any response to the RRC connection request signalling message that was passed on to the MAC layer for sending to the base station. Therefore, as an additional fail-safe mechanism, the RRC layer starts a timer (called `T300') upon requesting the base station to set up an RRC connection for the given mobile telephone, and determines an RRC connection failure after a predetermined time period, e.g. upon expiry of the 'T300' timer. The RRC connection failure may be indicated to higher layers as well, e.g. in order to display an appropriate error message on the display of the mobile telephone. In case of a failure, the RRC layer may re-send the RRC connection request signalling message to the same base station (via the MAC layer) which will trigger a new Random Access Procedure at the MAC layer. The number of times the RRC layer is allowed to attempt establishment of a connection with the same cell may also be limited. Once this limit is reached, the mobile telephone may be unable to establish an RRC connection via this cell, although it may then try to establish an RRC connection via a different cell.

In summary, both the MAC and the RRC layer implement fail-safe mechanisms to ensure that an RRC connection can be set up with a base station even in case of an initial communication failure. However, in some scenarios, the above mechanisms may not be adequate and setting up of the RRC connection (and hence communication of any data) may not be possible between the mobile telephone and the base station.

In one particular scenario, the mobile telephone may incorrectly select a cell as a result of geographic and/or environmentally induced communication imbalance between the measured strength of the downlink signal received by a mobile telephone from a base station and the ability of the base station to receive, correctly, an uplink signal from that mobile telephone. In this scenario, for example, the mobile telephone may select a cell having the strongest measured signal power at the location of the mobile telephone. The mobile telephone will then attempt to establish an RRC connection (and perform an associated random access procedure) with the base station operating the selected cell. However, in this scenario, as a result of the geographic/environmentally induced imbalance, the particularly strong downlink signal measured by the mobile telephone may have arisen due to a non-usual propagation of the base station's signal caused by geographic/environmental factors (e.g. a lake surface carrying electromagnetic waves over a long distance without significant degradation of the signal). On the other hand, a similar good propagation of the mobile telephone's uplink signal may not be achieved, e.g. due to the mobile telephones having a maximum power limitation which is simply not enough to reach the base station even under perfect signal propagation conditions. This in turn may result in the base station being unable to receive the mobile telephone's random access preamble transmission at all or the base station being unable to receive the random access preamble transmission correctly to allow proper synchronisation between the base station and the mobile telephone. The mobile telephone will not then receive the expected random access response.

Therefore, in the case of such a geographic/environmentally induced communication imbalance, it is not possible for the mobile telephone to establish an RRC connection with the base station. Instead, from the perspective of the MAC layer, the random access preamble may continue to be re-transmitted to the same base station repeatedly, until the MAC layer is reset, without ever achieving correct synchronisation between the base station and the mobile telephone at the MAC layer. From the perspective of the RRC layer, when attempting to initiate an RRC connection with the base station that operates a selected cell, the T300 timer is started. Expiry of the T300 timer indicates that the RRC connection attempt has failed and so a new RRC connection setup procedure is initiated, for the same cell, with the same base station (assuming that the cell continues to be measured/observed to have the strongest signal, for example because the mobile telephone has remained stationary and/or the environmental factors causing the above described signal propagation remain the same).

One option considered for attempting to address the above geographic/environmentally induced communication imbalance issues, is a 'network deployment' based approach. In such an approach, cells experiencing the above connection failure issues first have to be correctly identified by the network operator. Once such cells have been identified, one or more additional base stations may be deployed in the affected area so that the cells operated by the additional base stations can be selected in preference to the cell affected by environmental factors as discussed above. Identification of such adversely affected cells may be achieved by the operator testing the network using dedicated test equipment (e.g. carrying out so called `drive tests'). Such an approach can, therefore, beneficially address the geographic/environmentally induced communication imbalance issues in the long term although it may not be as effective for providing a solution in the short to mid-term because deployment of additional base stations requires significant investment in additional network equipment, network planning, and further drive tests, and will naturally take time to implement. Further, such testing is generally expensive and has an undesirable environmental impact arising from the vehicular emissions associated with drive tests.

Another option considered is that if the mobile telephone experiences a connection failure issue, e.g. when it reaches the maximum number of allowed re-transmissions of an RRC request for the second time in the same cell, then it can try to resolve the issue on its own. For example, the mobile telephone may perform a cell reselection autonomously, temporarily, to a different cell than the cell having the strongest measured signal (e.g. a cell having a signal strength within an offset value compared to the strongest cell signal). Additionally, the network may also indicate to the mobile telephones within its cell, e.g. by broadcasting an appropriate indicator as part of the system information, whether such 'autonomous' cell reselection is allowed. In either case, after a limited time period, the mobile telephone returns to its normal operation and selects the cell having the strongest signal at that time (e.g. based on updated signal measurements). However, this solution also cannot easily address the connection failure issues experienced by the mobile telephone, because the newly selected cell may be the same cell that previously resulted in repeated connection establishment failures. Moreover, if this option is followed, the network does not have sufficient information on the connection failure(s) experienced by the mobile telephone and/or whether the selected cell has the strongest signal or not, thus it is not possible for the network operator to identify and address such geographic/environmentally induced communication imbalance issues. Further, the mobile telephone can only determine that RRC/MAC communication has failed repeatedly but it cannot determine whether or not the failure is caused by geographic/environmental or other factors, e.g. cell congestion. Therefore, this UE based solution may lead to mass cell reselection when the failure is due to congestion, which should be avoided as such (possibly repeatedly occurring) mass cell reselection would only add to the load of the communication system.

US 2014/023032 A1 discloses a communication method for a terminal, which enables the transmission of information to a base station and which comprises the steps of: attempting random access to a first base station; creating an rlf-report including one or more pieces of information associated with the random access in the event the random access fails; connecting to one base station from among base stations including the first base station; and transmitting the rlf-report to the connected base station.

WO2013/045537 A1 discloses a method involving receiving radio link failure data related to a connection failure experienced by a user equipment by a radio access node, wherein determination is made to check whether the radio link failure data satisfies a condition and radio link failure data is sent to another radio access node and a radio link failure data collection entity.

### Disclosure of the Invention

The present invention provides a communication device, a base station, corresponding methods and communication system, as disclosed in the appended independent claims. Optional, but advantageous features are disclosed in the appended dependent claims.

Also disclosed is a communication device for use in a communication system in which a base station operates a cell that is selectable by the communication device in a region where connection attempts by the communication device to the base station operating that cell are at risk of failure, the communication device comprising: means for selecting said cell when said communication device is in said region where connection attempts by the communication device to said base station operating that cell are at risk of failure; means for attempting, within said region, to initiate a connection with said base station that operates said cell when said cell has been selected; means for identifying that consecutive failures have occurred in respective attempts to initiate said connection; means for logging information identifying that consecutive failures in said respective attempts to initiate said connection have occurred; and means for reporting said information identifying that consecutive failures in said respective attempts to initiate said connection have occurred to said communication system at a reporting opportunity.

The region where connection attempts by the communication device to the base station operating that cell are at risk of failure may comprise a region in which downlink signals from said base station are stronger than downlink signals from other base stations but in which uplink signals from said communication device cannot be successfully received by said base station.

The communication device may further comprise means for measuring respective downlink signal strengths associated with a plurality of cells, including said cell that is selectable by the communication device in a region where connection attempts by the communication device to the base station operating that cell are at risk of failure, in the vicinity of said communication device, and said means for selecting said cell may be operable to select the cell having the highest measured signal strength from said measured respective downlink signal strengths.

The means for attempting to initiate a connection with said base station that operates said cell may be operable to attempt to establish a Radio Resource Control (RRC) and/or a Media Access Control (MAC) connection via said cell when said cell has been selected.

The means for attempting to initiate a connection may be operable to attempt to initiate said connection by sending information identifying that said connection is required; and said identifying means may be operable to identify a failure in said attempt to initiate said connection by determining that a response, to said information identifying that said connection is required, has not been received.

The means for attempting to initiate a connection may be operable to attempt to initiate said connection by sending, to said base station information identifying that said connection is required; and said identifying means may be operable to identify a failure in said attempt to initiate said connection by determining that a response, to said information identifying that said connection is required, has been received that indicates that said information identifying that said connection is required has not been received correctly by said base station.

The identifying means may be operable to identify said failure in said attempt to initiate said connection upon failure to receive said response in a predefined time window (e.g. a predefined time window comprising at least one predefined subframe) following the sending of said information identifying that said connection is required.

The information identifying that said connection is required may comprise a preamble for use in synchronising said attempted connection and/or identifying the communication device (e.g. a random access channel preamble).

The identifying means may be operable to identify a failure in an attempt to initiate said connection upon expiry of a timer (e.g. a T300 timer) before said response has been received.

The identifying means may be operable to identify said consecutive failures in respective attempts to initiate said connection upon identifying that said response has not been (correctly) received for the same cell on a plurality of occasions.

The means for attempting to initiate said connection with the at least one base station that operates said at least one cell may be operable to initiate a random access procedure with the at least one base station via said at least one cell. In this case, the means for attempting to initiate said connection with the at least one base station that operates said at least one cell may be operable to initiate said random access procedure in response to receiving a request to establish an RRC connection with said communication system.

The information identifying that consecutive failures in said respective attempts to initiate said connection have occurred may comprise information identifying that a consecutive Radio Resource Control (RRC) and/or a consecutive Media Access Control (MAC) connection establishment failure has occurred in said at least one cell.

The reporting means may be operable to report said information identifying that consecutive failures in said respective attempts to initiate said connection have occurred using at least one signalling message. The at least one signalling message may comprise at least one `UE Information Response' message. The at least one signalling message may comprise at least one information element (IE). The at least one information element may comprise at least one of: an information element for indicating that a consecutive connection establishment failure has occurred (e.g. a 'Consecutive Conn Est Fail' IE), an information element for indicating the number of consecutive connection establishment failures that has occurred, (e.g. a 'Num of Consecutive Conn Est Fail' IE); and an information element for indicating that a random access response failure has occurred (e.g. a `RAR failure' IE).

The information identifying that consecutive failures in said respective attempts to initiate said connection have occurred may comprise information identifying at least one of: information identifying said selected cell, information identifying a geographical location of said communication device; information identifying a time when said consecutive failures in said respective attempts to initiate said connection have occurred; information identifying a signal strength of said selected cell; information identifying a signal strength of at least one neighbour cell; and information identifying that a random access response has been detected.

The reporting means may be operable to report said information identifying that consecutive failures in said respective attempts to initiate said connection have occurred to said communication system after a successful connection attempt has been made either to said selected cell or another cell (e.g. a subsequently selected cell).

The communication device may further comprise means for storing, in a memory, configuration data for configuring the communication device to log information identifying that consecutive failures in respective attempts to initiate said connection have occurred. The storing means may be operable to store said configuration data prior to deployment of said communication device (e.g. as a factory/operator configuration data).

The communication device may also comprise means for receiving, from a base station, said configuration data for configuring the communication device to log information identifying that consecutive failures in respective attempts to initiate said connection have occurred. In this case, the receiving means may be operable to receive said configuration data using at least one signalling message. In this case, the at least one signalling message may comprise at least one `UE Information Request' message.

The communication device may further comprise means for receiving control data for authorising said communication device to (re)select a different cell when said identifying means identifies that at least one failure in an attempt to initiate said connection has occurred. The control data may comprise a random access response communication including a backoff indicator set to a predefined value. The control data may also comprise a random access response communication without a backoff indicator.

The different cell may be a cell having lower (e.g. a next highest) measured signal strength than for said cell that is selectable by the communication device in a region where connection attempts by the communication device to the base station operating that cell.

The selecting means may be operable to consider said at least one selected cell to be barred from at least one subsequent (re)selection when said identifying means identifies consecutive failures in respective attempts to initiate said connection.

Also disclosed is a communication device for use in a communication system in which a base station operates a cell that is selectable by the communication device in a region where connection attempts by the communication device to the base station operating that cell are at risk of failure, the communication device comprising: means for selecting said cell when said communication device is in said region where connection attempts by the communication device to the base station operating that cell are at risk of failure; means for attempting, within said region, to initiate a connection with said base station that operates said cell when said cell has been selected; means for receiving control data authorising said communication device to (re)select a different cell when said identifying means identifies that at least one failure in an attempt to initiate said connection has occurred; and means for identifying at least one failure in an attempt to initiate said connection; wherein said means for selecting is operable to (re)select a different cell responsive to receipt of said control data and identification of at least one failure in an attempt to initiate said connection.

The communication device may comprise at least one of a mobile telephone and user equipment operating in accordance with the Long Term Evolution (LTE) standards.

Also disclosed is a base station for use in a communication system in which the or another base station operates a cell that is selectable by a communication device in a region where connection attempts by the communication device to the base station operating that cell are at risk of failure, the base station comprising: means for establishing a connection with a communication device via a cell operated by said base station; means for sending information to said communication device, using said established connection, for configuring said communication device for logging information identifying that consecutive failures in respective attempts to initiate a connection with the or another base station of said communication system have occurred.

The base station may further comprise means for receiving a report from said communication device comprising said information identifying that consecutive failures in respective attempts to initiate a connection have occurred. In this case, the receiving means may be operable to receive said information identifying that consecutive failures in said respective attempts to initiate said connection have occurred using at least one signalling message.

The sending means may be operable to send information to said communication device for configuring said communication device for logging information identifying that consecutive failures in attempting to establish a Radio Resource Control (RRC) and/or a Media Access Control (MAC) connection has occurred.

The sending means may be operable to send information to said communication device for configuring said communication device for logging information identifying that at least one failure in attempting to initiate a connection by sending information identifying to the or another base station that said connection is required has occurred; and said communication device may be operable to identify a failure in attempting to initiate said connection by determining that a response, to said information identifying that said connection is required, has not been received.

The sending means may be operable to send information to said communication device for configuring said communication device for logging information identifying that at least one failure in attempting to initiate a connection by sending information to the or another base station identifying that said connection is required has occurred; and said communication device may be operable to identify a failure in attempting to initiate said connection by determining that a response, to said information identifying that said connection is required, has been received that indicates that said information identifying that said connection is required has not been received correctly by the or other base station.

The sending means may be operable to send information to said communication device for configuring said communication device for logging information identifying that said failure in said attempt to initiate said connection has occurred upon failure to receive said response in a predefined time window (e.g. a predefined time window comprising at least one predefined subframe) following the sending of said information identifying that said connection is required.

The information identifying that said connection is required may comprise a preamble for use in synchronising said attempted connection and/or identifying the communication device (e.g. a random access channel preamble).

The sending means may be operable to send information to said communication device for configuring said communication device for logging information identifying a failure in an attempt to initiate said connection upon expiry of a timer (e.g. a T300 timer) before said response has been received.

The sending means may be operable to send information to said communication device for configuring said communication device for logging information identifying said consecutive failures in respective attempts to initiate said connection upon identifying that said response has not been (correctly) received for the same cell on a plurality of occasions.

The attempt to initiate said connection with the at least one base station that operates said at least one cell may comprise initiating a random access procedure with the at least one base station via said at least one cell. The attempt to initiate said connection with the at least one base station that operates said at least one cell may comprise initiating said random access procedure in response to receiving a request to establish an RRC connection with said communication system.

Also disclosed is a base station for operating, in a communication system, a cell that is selectable by any of a plurality of communication devices in a region where connection attempts by a communication device to said base station are at risk of failure, the base station comprising: means for obtaining information for use in identifying that said cell is a cell that covers a region in which the cell is selectable by a communication device and in which connection attempts by that communication device to said base station are at risk of failure; and means for providing, to a communication device attempting to initiate connection to said base station, control data authorising said communication device to (re)select a different cell when said communication device identifies that at least one failure in an attempt to initiate said connection has occurred.

The means for obtaining said information may be operable to obtain information indicating that consecutive failures in respective attempts to initiate a connection with said base station via said cell have occurred for at least one communication device; and the base station may be operable to determine, from said information indicating that consecutive failures have occurred, that said cell is a cell that covers a region in which the cell is selectable by a communication device and in which connection attempts by that communication device to said base station are at risk of failure.

The base station may be operable to determine that said cell is a cell that covers a region in which the cell is selectable by a communication device and in which connection attempts by that communication device to said base station are at risk of failure from said information indicating that consecutive failures have occurred and information identifying a load level (or congestion level) in said communication system.

The information identifying a load level (or congestion level) in said communication system may comprise a load level for a random access channel, e.g. a physical random access channel (PRACH).

The providing means may be operable to provide said control data authorising said communication device to (re)select a different cell by broadcasting said control data. The providing means may also be operable to provide said control data authorising said communication device to (re)select a different cell in response to a random access preamble received from any communication device.

The base station may further comprise means for sending configuration data to the communication device for configuring the communication device to log information identifying that consecutive failures in respective attempts to initiate said connection have occurred. The sending means may be operable to send said configuration data using at least one signalling message. The at least one signalling message may comprise at least one `UE Information Request' message.

The control data may be operable to request said communication device to consider said at least one selected cell to be barred from at least one subsequent (re)selection when said communication device identifies consecutive failures in respective attempts to initiate said connection.

The control data may comprise a random access response communication including a backoff indicator set to a predefined value. The control data may also comprise a random access response communication without a backoff indicator.

The base station may comprise a base station operating in accordance with the Long Term Evolution (LTE) standards.

Also disclosed is a communication device for use in a communication system in which a base station operates a cell that is selectable by the communication device in a region where connection attempts by the communication device to the base station operating that cell are at risk of failure, the communication device comprising a processor and a transceiver. The processor is configured to select said cell when said communication device is in said region where connection attempts by the communication device to said base station operating that cell are at risk of failure. The transceiver is configured to attempt, within said region, to initiate a connection with said base station that operates said cell when said cell has been selected. The processor is configured to identify consecutive failures in respective attempts to initiate said connection; and log information identifying that consecutive failures in said respective attempts to initiate said connection have occurred; and the transceiver is configured to report said information identifying that consecutive failures in said respective attempts to initiate said connection have occurred to said communication system at a reporting opportunity.

Also disclosed is a communication device for use in a communication system in which a base station operates a cell that is selectable by the communication device in a region where connection attempts by the communication device to the base station operating that cell are at risk of failure, the communication device comprising a processor and a transceiver. The processor is configured to select said cell when said communication device is in said region where connection attempts by the communication device to the base station operating that cell are at risk of failure. The transceiver is configured to attempt, within said region, to initiate a connection with said base station that operates said cell when said cell has been selected; and receive control data authorising said communication device to (re)select a different cell when said processor identifies that at least one failure in an attempt to initiate said connection has occurred. The processor is configured to identify at least one failure in an attempt to initiate said connection; wherein said processor is operable to (re)select a different cell responsive to receipt of said control data and identification of at least one failure in an attempt to initiate said connection.

Also disclosed is a base station for use in a communication system in which the or another base station operates a cell that is selectable by a communication device in a region where connection attempts by the communication device to the base station operating that cell are at risk of failure, the base station comprising a processor and a transceiver. The transceiver configured to establish a connection with a communication device via a cell operated by said base station; and send information to said communication device, using said established connection, for configuring said communication device for logging information identifying that consecutive failures in respective attempts to initiate a connection with the or another base station of said communication system have occurred.

Also disclosed is a base station for operating, in a communication system, a cell that is selectable by any of a plurality of communication devices in a region where connection attempts by a communication device to said base station are at risk of failure, the base station comprising a processor and a transceiver. The processor is configured to obtain information for use in identifying that said cell is a cell that covers a region in which the cell is selectable by a communication device and in which connection attempts by that communication device to said base station are at risk of failure; and the transceiver is configured to provide, to a communication device attempting to initiate connection to said base station, control data authorising said communication device to (re)select a different cell when said communication device identifies that at least one failure in an attempt to initiate said connection has occurred.

Also disclosed is a communication system comprising the above described communication device and the above described base station.

Also disclosed is a method performed by a communication device in a communication system in which a base station operates a cell that is selectable by the communication device in a region where connection attempts by the communication device to the base station operating that cell are at risk of failure, the method comprising: selecting said cell when said communication device is in said region where connection attempts by the communication device to said base station operating that cell are at risk of failure; attempting, within said region, to initiate a connection with said base station that operates said cell when said cell has been selected; identifying consecutive failures in respective attempts to initiate said connection; logging information identifying that consecutive failures in said respective attempts to initiate said connection have occurred; and reporting said information identifying that consecutive failures in said respective attempts to initiate said connection have occurred to said communication system at a reporting opportunity.

Also disclosed is a method performed by a communication device in a communication system in which a base station operates a cell that is selectable by the communication device in a region where connection attempts by the communication device to the base station operating that cell are at risk of failure, the method comprising: selecting said cell when said communication device is in said region where connection attempts by the communication device to the base station operating that cell are at risk of failure; attempting, within said region, to initiate a connection with said base station that operates said cell when said cell has been selected; receiving control data authorising said communication device to (re)select a different cell when it is identified that at least one failure in an attempt to initiate said connection has occurred; identifying that at least one failure in an attempt to initiate said connection has occurred; and (re)selecting a different cell responsive to receipt of said control data and identification of at least one failure in an attempt to initiate said connection.

Also disclosed is a method performed by a base station in a communication system in which the or another base station operates a cell that is selectable by a communication device in a region where connection attempts by the communication device to the base station operating that cell are at risk of failure, the method comprising: establishing a connection with a communication device via a cell operated by said base station; and sending information to said communication device, using said established connection, for configuring said communication device for logging information identifying that consecutive failures in respective attempts to initiate a connection with the or another base station of said communication system have occurred.

Also disclosed is a method performed by a base station for operating, in a communication system, a cell that is selectable by any of a plurality of communication devices in a region where connection attempts by a communication device to said base station are at risk of failure, the method comprising: obtaining information for use in identifying that said cell is a cell that covers a region in which the cell is selectable by a communication device and in which connection attempts by that communication device to said base station are at risk of failure; and providing, to a communication device attempting to initiate connection to said base station, control data authorising said communication device to (re)select a different cell when said communication device identifies that at least one failure in an attempt to initiate said connection has occurred.

Aspects of the invention extend to computer program products such as computer readable storage media having instructions stored thereon which are operable to program a programmable processor to carry out a method as recited in the claims and/or to program a suitably adapted computer to provide the apparatus recited in any of the claims. The computer program products may be provided on a carrier signal or on a recording medium, such as a CD, DVD or the like.

### Brief Description of the Drawings

Embodiments of the invention will now be described, by way of example only, with reference to the attached figures in which:
Figure 1 schematically illustrates a mobile telecommunication system to which embodiments of the invention may be applied;
Figure 2 is a block diagram illustrating the main components of the mobile telephone forming part of the system shown in Figure 1;
Figure 3 is a block diagram illustrating the main components of a base station forming part of the system shown in Figure 1;
Figure 4 shows an example timing diagram illustrating a method performed by components of the communication system when configuring the logging and reporting of consecutive random access failures;
Figure 5 shows an example timing diagram illustrating a method performed by components of the communication system when alleviating consecutive random access failures;
Figure 6 shows an example timing diagram illustrating a method performed by components of the communication system when establishing a radio resource connection; and
Figure 7 shows an example timing diagram illustrating a method performed by components of the communication system when performing signalling relating to a random access procedure.

### Description of Embodiments

### Overview

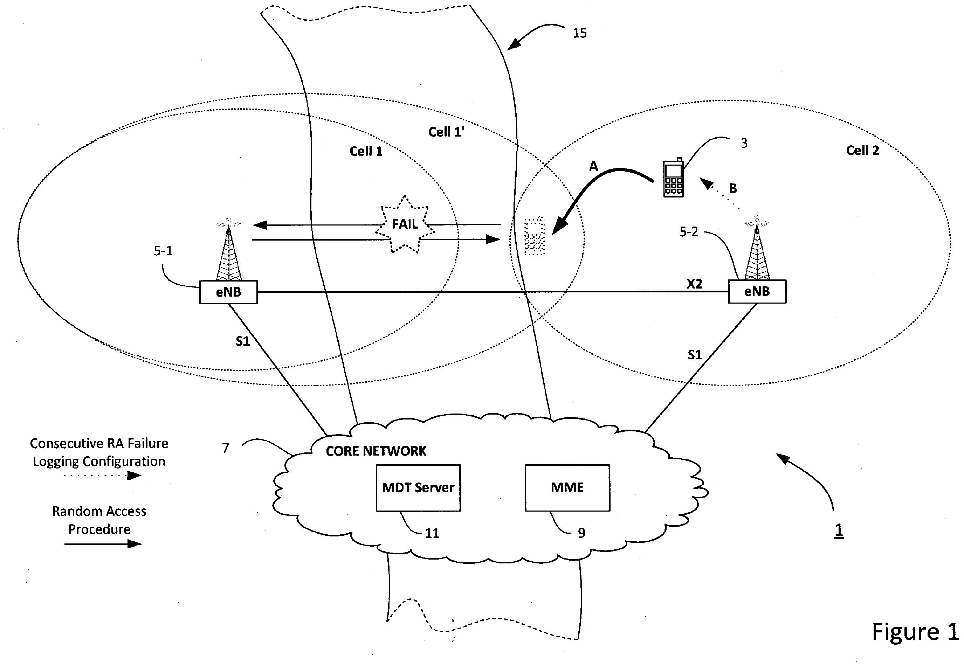

Figure 1 schematically illustrates a mobile (cellular) telecommunication system 1 that includes user equipment, e.g. mobile telephone 3 served by base stations 5-1 and/or 5-2. The base stations 5-1 and 5-2 each operate one or more cells (i.e. Cell 1 and Cell 2, respectively), within which they provide access to a core network 7 for the mobile telephone 3. In this example, Cell 1 and Cell 2 belong to the same tracking area.

In this system, the base stations 5-1 and 5-2 are coupled to each other via an X2 interface. The base stations 5-1 and 5-2 are also coupled to the core network 7 that includes, amongst other, a Mobility Management Entity (MME) 9 that manages the mobility of mobile telephones 3 within the core network 7, and a minimisation of drive tests (MDT) Server 11.

The downlink signals provided by the base station 5-1 in Cell 1 are effectively enhanced as a result of geographic/environmental factors (shown illustratively at 15) effectively providing a `phantom' (or 'quasi') cell (Cell 1') in which the downlink signals are anomalously strong. The geographic/environmental factors 15 do not have a corresponding enhancing effect on uplink signals from mobile telephones within the phantom cell Cell 1'. Accordingly, when a mobile telephone 3 that is camped in Cell 2 moves from Cell 2, into the overlapping area between the phantom cell Cell l'and Cell 2 (as indicated by arrow A) there will come a point when the downlink signals from base station 5-1 become stronger than the downlink signals from base station 5-2 but when any uplink signals from the mobile telephone 3 cannot be received properly by base station 5-1. At this point, the mobile telephone 3 will reselect to Cell 1 (even though the mobile telephone 3 is not properly located within Cell 1). Similarly, if the mobile telephone 3 is switched on in the overlapping area between the phantom cell and Cell 2 (as indicated by arrow A) there will be a region of the overlapping area in which the downlink signals from base station 5-1 are stronger than the downlink signals from base station 5-2 and in which the mobile telephone 3 will select Cell 1, in preference to Cell 2, even though the mobile telephone 3 is not properly located within Cell 1.

When the mobile telephone 3 that is camped in Cell 1, but is not properly located within Cell 1, detects the need to communicate data with another network node (e.g. another mobile telephone or a remote server), it triggers an RRC connection establishment procedure with the base station 5-1. The mobile telephone 3 does so by generating an RRC connection request message, which is passed from the RRC layer to the MAC layer for sending to the base station 5-1. This in turn triggers the MAC layer to initiate a Random Access Procedure with the base station 5-1 in the designated time slot.

However, in this case the uplink signals transmitted in the cell denoted `Cell 1' are not received (or are not properly received) by base station 5-1 as a result of the communication imbalance caused by the geographic/environmental factors 15. Consequently, the random access procedure (schematically illustrated by arrows in Figure 1) fails in `Cell 1 '. The procedure may fail due to failure of the base station 5-1 to receive the random access preamble sent by the mobile telephone 3 or in a subsequent step, e.g. because the base station 5-1 transmits an incorrect random access response to the mobile telephone 3 (or a random access response addressed to a different mobile telephone) because the random access preamble has been received incorrectly.

Upon experiencing a MAC layer communication failure arising from the random access procedure failure, the mobile telephone 3 retransmits the random access preamble until it reaches a predefined number of retransmissions (e.g. a predefined 'retransmission limit'), when the MAC layer needs to be reset. The MAC layer may also be reset by a higher layer (e.g. the RRC layer), for example, at the expiry of the T300 timer.

In this example, however, prior to entering the phantom cell, the mobile telephone 3 is beneficially configured by the communication network 1 to detect and log events that are indicative of consecutive random access failures resulting from geographic/environmentally induced communication imbalance issues.

Specifically, in this example, a base station (e.g. base station 5-2) with which the mobile telephone 3 has previously established an RRC connection configures the mobile telephone 3 (e.g. via appropriate signalling messages over the established RRC connection or via other means, as schematically indicated by arrow B in Figure 1) to log and report an occurrence of consecutive communication failures with respect to a cell of the communication network 1. Such consecutive communication failures may include, for example, a consecutive random access failure and/or a consecutive RRC connection request failure (which is, in itself, indicative of consecutive random access failures). The mobile telephone 3 is also beneficially configured to log other related information including, for example: information identifying the cell and/or location in which the consecutive random access failures have been experienced; and/or the results of signal quality/strength measurements for the cell in which the consecutive random access failures have been experienced and/or for neighbouring cells.

Therefore, when the mobile telephone 3 is located within the overlapping coverage area of the phantom cell Cell 1 'and Cell 2, it will collect information indicative of consecutive random access failures resulting from geographic/environmentally induced communication imbalance issues and related information. This information can then be reported later when the mobile telephone 3 successfully establishes an RRC connection with any suitably configured base station (e.g. base station 5-2).

The base station 5-2 receiving the report may then forward it to the base station 5-1 operating the affected cell (Cell 1) via the X2 interface provided between them, or the base station 5-2 receiving the report may forward it to any other network node, e.g. an MDT server 11 in the core network 7, for alleviation of the problem in the affected cell.

Advantageously, the information relating to consecutive communication failure is collected from the mobile telephone 3 using a request-response procedure similar to the procedures specified in the 3GPP TS 37.320 V11.3.0 standard titled "Radio measurement collection for Minimization of Drive Tests (MDT)". In this example however, instead of reporting only the last successfully completed random access procedure or the last connection establishment failure (from which it is not possible to determine the existence of the geographic/environmentally induced communication imbalance issues), the mobile telephone 3 advantageously reports, to the network, that a consecutive communication failure has occurred.

Advantageously, the network node receiving the mobile telephone's 3 report, e.g. the base station 5-1 operating the adversely affected cell (Cell 1), can determine from the information included in the report and any additional information available to this network node (e.g. information on congestion within the cell to which the report relates) whether the reported consecutive connection establishment failure is related to an unusual propagation of the base station's 5-1 signal (which may be indicative of geographic/environmentally induced communication imbalance issues) or whether it is related to any other issue, such as congestion in the cell denoted `Cell 1'. Therefore, the base station 5 serving the mobile telephone 3 is able to assist cell selection/reselections for mobile telephones entering its coverage area such that mobile telephones experiencing consecutive random access failures do not become trapped in a repeated cycle of connection attempts within the phantom cell.

In particular, if the base station 5-1 determines that the consecutive connection establishment failures are due to geographic/environmentally induced communication imbalance issues in the cell denoted `Cell 1', it can provide an indication to the mobile telephones 3 attempting to establish an RRC connection via that cell that they are allowed to select the second best cell if they experience a random access failure (or consecutive random access failures) in the cell denoted `Cell 1'. Such an indication may be provided by the base station 5-1 during the random access procedure itself, e.g. by appropriately setting (e.g. setting its value to a predefined number, e.g. to '0') or possibly omitting the so called Backoff Indicator (BI) from the random access response transmitted by the base station 5-1 (which may be in response to any successfully received random access preamble on the stronger downlink, e.g. a preamble sent by another mobile telephone closer to the base station) and received by the mobile telephone 3. This indication informs the mobile telephone 3 that the cell denoted `Cell 1' is to be considered barred for at least the next cell reselection/handover procedure by that mobile telephone 3. Such indication may also be provided by the base station 5-1 via system broadcast.

On the other hand, if the base station 5-1 determines that the consecutive connection establishment failures in 'Cell l' are caused by other issues, e.g. congestion, it can provide an (explicit or implicit) indication to the mobile telephones 3 attempting to establish an RRC connection via that cell that they should continue following normal RRC/MAC procedures even if they experience a random access failure (or consecutive random access failures) in `Cell 1'.

### Mobile Telephone

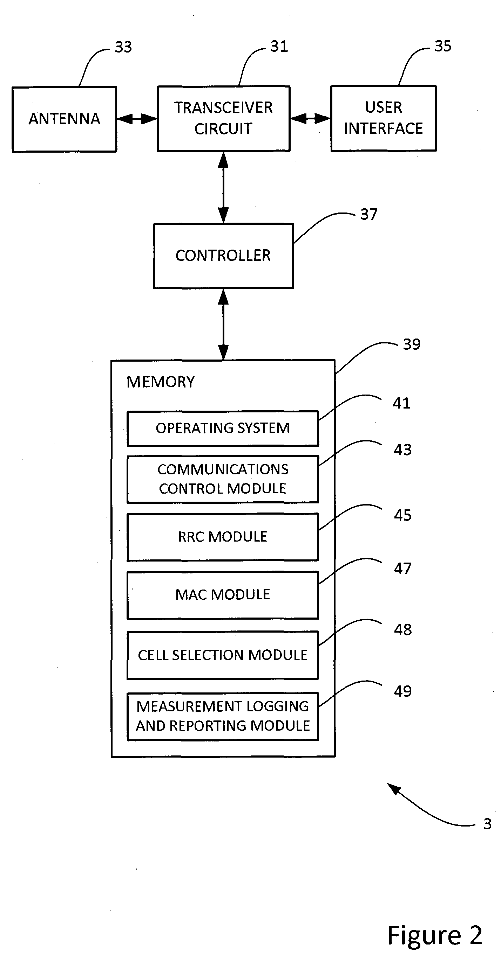

Figure 2 is a block diagram illustrating the main components of the mobile telephone 3 shown in Figure 1.

As shown, the mobile telephone 3 includes a transceiver circuit 31 which transmits signals to, and receives signals from, the base station 5 via antenna 33. The mobile telephone 3 further includes a user interface 35. The operation of the transceiver circuit 31 is controlled by a controller 37 in accordance with software stored in memory 39. The software includes, among other things, an operating system 41, a communications control module 43, a radio resource control (RRC) module 45, a media access control (MAC) module 47, a cell selection module 48, and a measurement logging and reporting module 49.

The communications control module 43 controls communication with the base station 5 including, for example, allocation of resources to be used by the transceiver circuit 31 in its communications with the base station 5.

The radio resource control module 45 controls the transition between various RRC modes and handles associated RRC signalling to/from the base station 5 (via the media access control module 47).

The media access control module 47 controls the communication between the mobile telephone 3 and the base station 5. In particular, the media access control module 47 performs signalling related to a random access procedure upon initiation of the establishment of an RRC connection by the radio resource control module 45. The media access control module 47 also keeps track of the number of times the random access procedure fails, and provides information to the cell selection module 48 identifying e.g. the cell and the number of times the random access procedure failed. The media access control module 47 may also identify whether the failure is related to sending or receiving random access related signalling.

The cell selection module 48 selects the cell for communicating with the network and provides an indication of the selected cell to the other modules. In particular, the cell selection module 48 maintains a list of cells and associated signal quality (e.g. measured/received signal strength) and selects the cell having the strongest signal. However, when the cell selection module 48 determines that consecutive random access failure has arisen (e.g. based on information provided by the media access control module 47) with respect to the cell having the strongest signal, the cell selection module 48 selects the cell having the second best/second strongest signal, if it is authorised to do so.

The measurement logging and reporting module 49 obtains configuration data for logging and reporting consecutive communication failure issues and to generate and provide, to the network, information relating to such consecutive communication failure issues. The measurement logging and reporting module 49 can provide such information, for example, in response to a request from a network entity (such as a base station 5) and/or upon establishment of an RRC connection (by the RRC module 45) with a base station 5.

### Base station

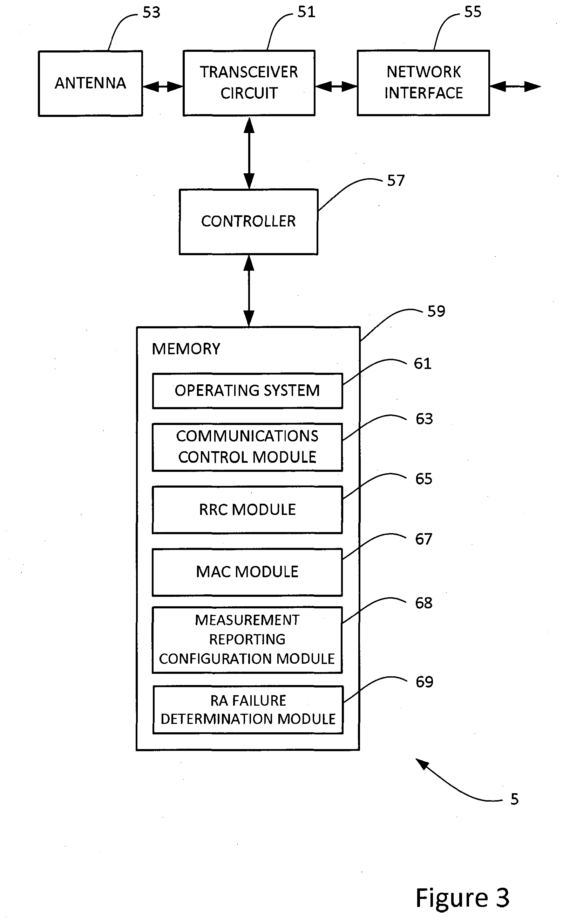

Figure 3 is a block diagram illustrating the main components of a base station 5. The base station 5 is a fixed communication node providing services to user equipment (mobile telephone) 3 within its coverage area. As shown, the base station 5 includes a transceiver circuit 51 which transmits signals to, and receives signals from, the mobile telephone 3 via at least one antenna 53. The base station 5 also transmits signals to and receives signals from the core network 7 and other neighbouring base stations 5 via a network interface 55 (for communicating with neighbouring base stations 5 and with the core network 7 using the X2 and S 1 interfaces, respectively). The operation of the transceiver circuit 51 is controlled by a controller 57 in accordance with software stored in memory 59. The software includes, among other things, an operating system 61, a communications control module 63, a radio resource control (RRC) module 65, a media access control (MAC) module 67, a measurement reporting configuration module 68, and a random access (RA) failure determination module 69.

The communications control module 63 controls communications between the base station 5 and the mobile telephones 3, and the network devices such as the MME 9, and the MDT server 11.

The radio resource control module 65 controls the radio communication resources used between the base station 5 and the mobile telephones 3 attached thereto. In particular, the radio resource control module 65 controls the establishment of an RRC connection between the base station 5 and the mobile telephones 3 within its cell(s).

The media access control module 67 controls the communication between the base station 5 and the mobile telephone 3. In particular, the media access control module 67 performs signalling related to a random access procedure initiated by the corresponding media access control module 47 of the mobile telephone 3.

The measurement reporting configuration module 68 configures compatible mobile telephones 3 served by the base station 5 for logging and reporting information relating to consecutive communication failure issues. The measurement reporting configuration module 68 can obtain such information, for example, in response to a request sent to and/or upon establishment of an RRC connection (by the RRC module 65) with a mobile telephone 3.

The random access failure determination module 69 obtains an indication from the measurement reporting configuration module 68 (based on information obtained from the mobile telephone 3) regarding a failure to establish a MAC layer connection with the mobile telephone 3. In particular, the random access failure determination module 69 determines (based on the received indication) when a consecutive random access failure has occurred with respect to a cell of the base station 5. In this case, the random access failure determination module 69 may determine (and notify the mobile telephone 3 accordingly) whether or not the mobile telephone 3 is authorised to select a different cell, e.g. a cell having a worse/weaker signal quality than the cell experiencing the determined consecutive random access failure.

In the above description, the mobile telephone 3 and the base station 5 are described for ease of understanding as having a number of discrete modules (such as the communications control modules and the media access control modules). Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

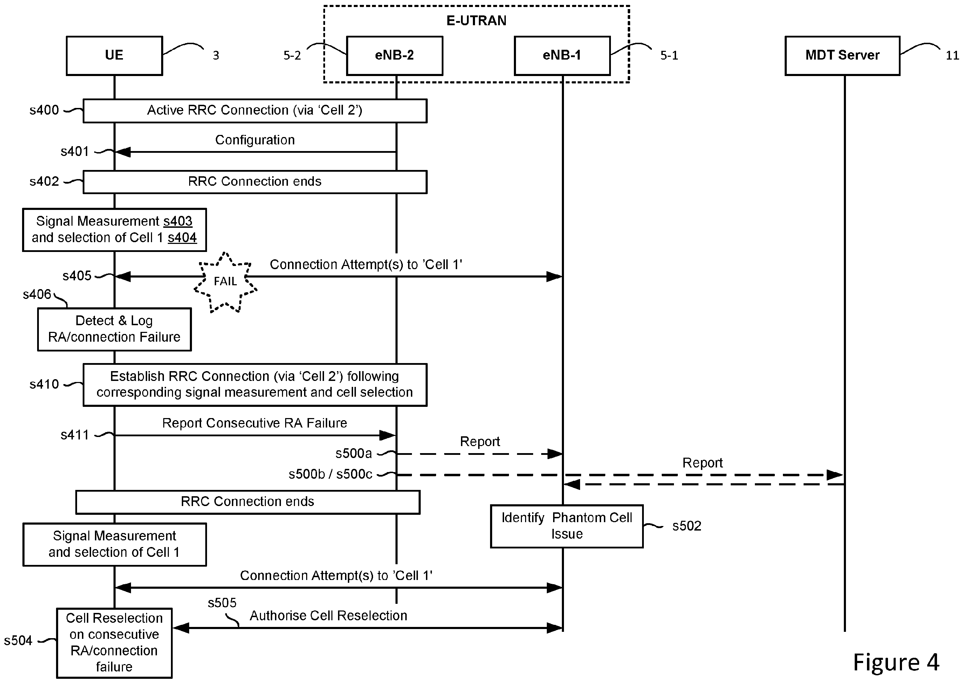

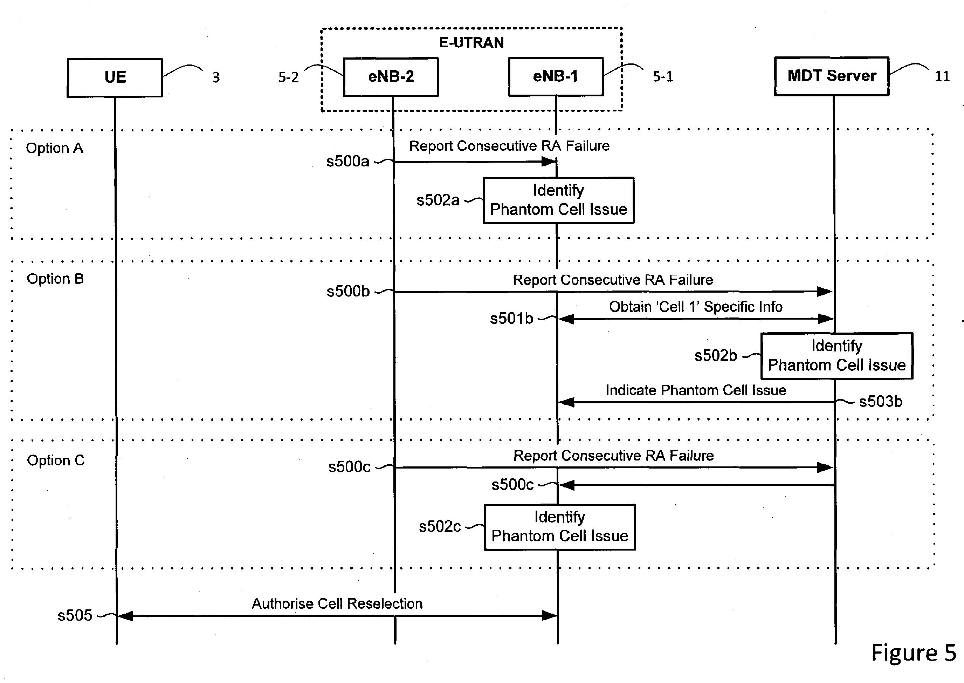

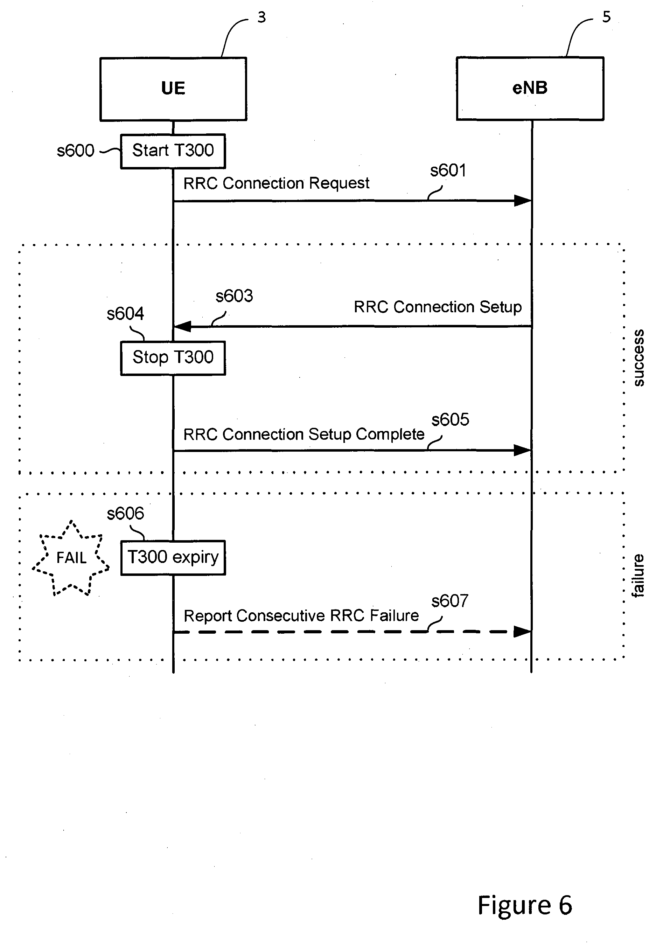

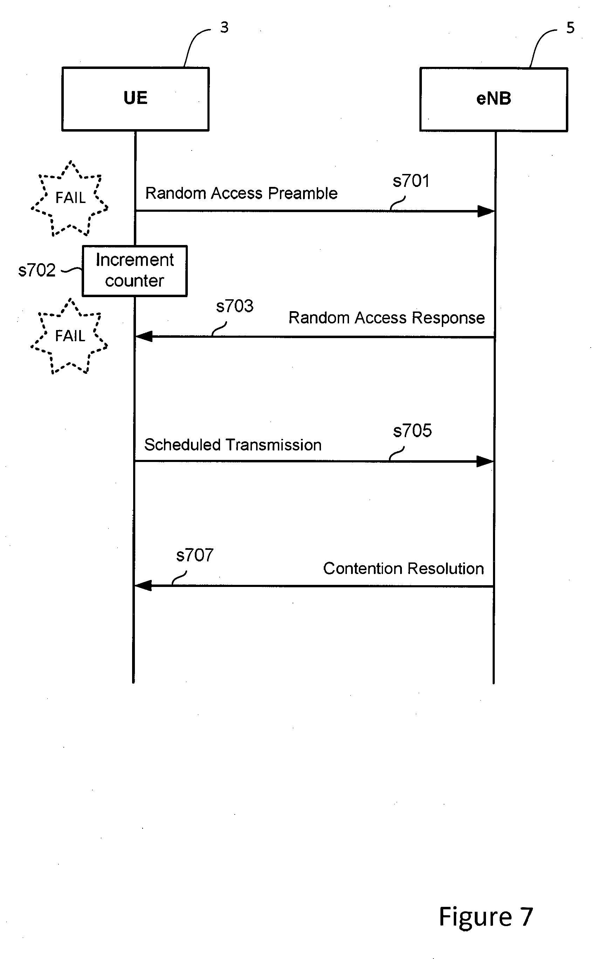

A number of different embodiments will now be described that illustrate how different aspects of the invention can be put into effect using the above mobile telephone 3 and base station 5. The embodiments will be described with reference to the timing diagrams shown in Figures 4 and 5, and the flow charts shown in Figures 6 and 7.

### Operation

Figure 4 shows an example timing diagram illustrating a method performed by components of the communication system 1 when configuring the logging and reporting of consecutive random access failures.

In this embodiment, initially, the mobile telephone (UE: user equipment) 3 is operating in the RRC active mode, as indicated generally at step S400. Therefore, the mobile telephone 3 is able to send/receive data via a cell of the communication network (in this case 'Cell 2' operated by base station 5-2).

Next, in this embodiment, in step S401, the base station (eNB-2) 5-2 (using its measurement reporting configuration module 68) configures the measurement logging and reporting module 49 of the mobile telephone 3 to log and report consecutive communication failure issues experiences by the mobile telephone 3.

After this, in step S402, the RRC connection ends and the mobile telephone 3 enters into the RRC idle operating mode.

As shown generally at step S403, the mobile telephone 3 performs signal measurements (as described in section 5.5.4 of the 3GPP TS 36.331 standard). Based on the results of these measurements, in step S404, the cell selection module 48 then performs cell reselection (as described in the 3GPP TS 36.304 standard), and in this example, selects the cell denoted 'Cell 1' (having the best/strongest signal).

However, the selected cell is affected by the geographic/environmentally induced imbalance thereby causing the mobile telephone 3 to select a 'phantom' cell. Consequently, when the mobile telephone 3 subsequently attempts to establish a connection with the cell denoted `Cell 1', as generally shown in step S405, one or more connection attempts will fail. For example, an RRC connection establishment procedure initiated by the RRC module 45 and/or a random access procedure initiated by the MAC module 47 may fail for the selected cell (Cell 1).

In step S406, the measurement logging and reporting module 49 detects (e.g. by communicating with the RRC module 45 and/or the MAC module 47) that a communication failure (in this example, a random access failure) has occurred with respect to the selected cell (Cell 1). Further details of detecting an RRC connection establishment failure will be given below with reference to Figure 6, and further details of detecting a random access procedure failure will be given with reference to Figure 7.

Continuing with step S406 of Figure 4, the measurement logging and reporting module 49 logs the details of the detected failure (in accordance with the configuration received at step S401) for subsequent reporting to the network.

Next, as shown in step S410, the mobile telephone 3 is able to establish an RRC connection, in this example, with the network via 'Cell 2' operated by base station 5-2, e.g. following further signal measurements and associated cell selection. Once the RRC connection has been established, the measurement logging and reporting module 49 sends (at S411) information relating to the experienced communication failure (e.g. a random access failure) with respect to Cell 1. Advantageously, the receiving base station 5-2 provides this information to a further network node (e.g. the base station (eNB-1) 5-1 operating the reported cell - in step S500a; or the MDT server 11 - in step S500b or S500c) for alleviation of the issues associated with the geographic/environmentally induced imbalance affecting the reported cell (Cell 1). Further details of the alleviation of the geographic/environmentally induced imbalance will be given below with reference to Figure 5.

As shown in step S502, the base station 5-1 operating the reported cell (using the information provided by the mobile telephone 3 and possibly further information available at this base station 5-2) is able to identify that its cell denoted `Cell 1' is subject to a phantom cell issue. Therefore, when the mobile telephone 3 (or any further user equipment within the coverage are of Cell 1) subsequently attempts to select a suitable cell (as generally shown in step S504), the base station 5-1 is able to assist the mobile telephone 3 (at S505) in selecting a cell that is not subject to the determined geographic/environmentally induced imbalance by authorising cell selection to the cell exhibiting the second strongest downlink signal strength. Advantageously, the mobile telephone 3 can reselect to a different cell (e.g. Cell 2) whilst located in the phantom cell Cell 1' even if the latest measurement results (obtained at step S413) indicate that Cell 1 has the strongest signal.

Figure 5 shows an example timing diagram illustrating a method performed by components of the communication system 1 when alleviating consecutive random access failures.

As mentioned above, the base station 5-2 receiving the information relating to the experienced communication failure (e.g. a random access failure) with respect to Cell 1 forwards the information to a further network node for alleviation of the reported issue.

In one example, denoted 'Option A' in Figure 5, the base station (eNB-2) 5-2 provides the received report to the base station (eNB-1) 5-1 operating the reported cell, as generally shown in step S500a. For example, the base stations may use the X2 interface provided between them. Once the base station 5-1 operating the reported cell (Cell 1) receives the information relating to the communication failure, it can identify (in step S502a) whether or not the reported communication failure is due to a phantom cell issue.

For example, the base station 5-1 can check whether congestion is observed on its Physical Random Access Channel (PRACH). If the result of this check indicates that congestion is not observed on the PRACH, the base station 5-1 can determine that the reported communication failure is due to a phantom cell (rather than congestion). In another example, the base station 5-1 can check whether the distance between the geographical location of the base station 5-1 and the geographical location of the reporting mobile telephone 3 at the time of the communication failure (if known) is greater than a threshold distance corresponding to the radius of the reported cell. In this case, for example, if the reporting mobile telephone 3 is determined to have been outside the reported cell when the communication failure occurred, the base station 5-1 can determine that the reported communication failure is due to a phantom cell.

In another example, denoted 'Option B' in Figure 5, the base station 5-2 provides the received report to the MDT server 11, as generally shown in step S500b. In this case, as generally shown at step S501b, the MDT server 11 may obtain cell specific information from the base station 5-1 (e.g. information relating to the PRACH of Cell 1 and/or geographical location of the base station 5-1) so that the MDT server 11 can identify (at S502b) the phantom cell issue affecting Cell 1 of the base station 5-1. If the phantom cell issue is identified, the MDT server 11 notifies the base station 5-1 operating the affected cell by generating and sending the base station 5-1, at step S503b, an appropriately formatted signalling message.

In yet another example, denoted 'Option C' in Figure 5, the base station 5-2 provides the received report to the MDT server 11, as generally shown in step S500c. However, in this example, the MDT server 11 may not identify whether or not the reported communication failure is due to a phantom cell issue. Instead, the MDT server 11 forwards the received report to the base station 5-1 operating the reported cell. Thus, similarly to Option A, the base station 5-1 can determine (at S502c) that the reported communication failure is due to a phantom cell.

Finally, once the phantom cell issue has been identified (in either one of steps S502a, S502b, and S502c), the base station 5-1 operating the affected cell can beneficially authorise cell reselection to the second best cell a subsequent communication attempt by the mobile telephone 3 (or any other user equipment) entering the phantom cell.

### Establishing an RRC connection

Figure 6 shows an example timing diagram illustrating a method performed by components of the communication system 1 when establishing a radio resource connection for a mobile telephone 3.

In this embodiment, initially, the mobile telephone 3 is operating in the RRC Idle mode. Therefore, when the mobile telephone 3 has new data to transmit, using its RRC module 45, it generates an appropriately formatted RRC request for establishing a connection with the radio access network via the cell (selected by its cell selection module 48) having the strongest signal.

As shown in step S600, the mobile telephone (UE) 3 starts a T300 timer and in step S601 its RRC module 45 attempts to send the generated message (e.g. an `RRC Connection Request' message) to the base station (eNB) 5 operating that cell. In particular, the generated RRC message is passed on to the MAC module 47 for transmission to the corresponding MAC module 67 of the base station 5 operating the selected cell. The signalling between the MAC modules 47 and 67, relating to a random access procedure to be followed before sending any RRC message, will be described later with reference to Figure 7.

Once the RRC module 45 receives, in step S603, an appropriate RRC response (e.g. an `RRC Connection Setup' message) from the corresponding RRC module 65 of the serving base station 5, it stops the T300 timer (as shown in step S604). The RRC module 45 confirms the establishment of the RRC connection via the selected cell by generating and sending, in step S605, an appropriately formatted confirmation message (e.g. an 'RRC Connection Setup Complete' message) to the serving base station 5.

However, if the response at S603 is not received from the serving base station 5 until expiry of the T300 timer at step S606, the RRC module 45 determines that the establishment of the RRC connection via the selected cell was unsuccessful. Therefore, the RRC module 45 generates, in step S607, an appropriately formatted reporting message (e.g. a 'Consecutive RRC Connection Setup Failure' message) for subsequent sending to the network (via a base station, either the same or a different one, with which an RRC connection can be set up). Once the consecutive connection failure report can be sent, the base station 5 receiving the report may share the report with a further network node via its network interface 55 (e.g. with a neighbouring base station operating the affected cell using the X2 interface or with the MDT server 11 via the S1 interface).

Advantageously, the mobile telephone 3 can thus inform its serving base station 5 (or any other network node) about the occurrence of a consecutive connection request failure situation experienced in the selected cell. Using the report and any further information available to the network, the base station 5 operating the affected cell is able to take appropriate corrective actions.

### Random Access Procedure

Figure 7 shows an example timing diagram illustrating a method performed by components of the communication system 1 when performing signalling relating to a random access procedure initiated by a mobile telephone 3.

A random access procedure may be initiated by the MAC module 47, although in this case it is initiated by a higher layer. More specifically, in this case the RRC module 45 requests the MAC module 47 to transmit the `RRC Connection Request' message (step S601 of Figure 6) to the base station 5, in order to establish an RRC connection via the selected cell of this base station 5. This request of the RRC module 45 in turn triggers a random access procedure to be performed between the mobile telephone 3 and the base station 5, in accordance with section 5.1 of 3GPP TS 36.321 V11.3.0.

As can be seen, the random access procedure starts at step S701, in which the MAC module 47 generates and sends an appropriately formatted Random Access Preamble to the corresponding MAC module 67 of the base station 5 operating the selected cell. Next, in step S702, the MAC module 47 increments its `preamble counter' by 1 (i.e. from the initial value of `0') to keep track of the number of consecutive random access attempts performed for this cell.

If the Random Access Preamble is successfully received by the MAC module 67 of the base station 5, it returns a Random Access Response to the MAC module 47 at step S703. If both steps S701 and S703 have been completed successfully, the MAC module 47 proceeds to step S705, in which it sends any scheduled transmission (in this case the RRC Connection Request message from the RRC module 45) to the base station 5. Finally, in step S707, receipt of the scheduled transmission is followed by contention resolution signalling between the respective MAC modules 47, 67 to help ensure that any potential contention between different devices 3 is resolved.

However, if step S701 and/or step S703 cannot be performed successfully, steps S701 and S702 are repeated until the `preamble counter' reaches a predefined value, when the MAC module 47 is reset by the mobile telephone 3. The MAC module 47 may also be reset by a higher layer, e.g. when the T300 timer expires. As described above, sending of the random access preamble (at S701) and/or receipt of the random access response (at S703) may fail due to various reasons, such as signal propagation issues in the selected cell, multiple user equipment communicating concurrently, and/or congestion in the selected cell.

In either case, if consecutive random access failure is observed, the mobile telephone 3 (using its RRC module 45 and/or its MAC module 47) generates a report about the details of the failure, for subsequent sending to the E-UTRAN. In particular, the report includes information obtained by a logging procedure as described below.

### Logging and reporting procedure

As described above, the mobile telephone 3 can be configured by the base station to log and report consecutive communication failure issues. Therefore, if a configured condition for logging a particular communication failure is met (e.g. when the MAC layer is reset), then the mobile telephone 3 logs the communication failure for subsequent reporting to the network. The communication failure report, which in this case comprises a report of a consecutive random access failure and/or a consecutive RRC connection request failure, preferably also identifies the time when the failure occurred, the location where the failure occurred, and/or the cell affected by the failure (e.g. using a global identification of the cell), a measured signal strength in the cell, etc. In this example, the report also includes the number of consecutive RRC connection request failures and/or the number of related random access responses that were unsuccessful (e.g. an indication that all random access responses in the given cell were unsuccessful).

Next, when the mobile telephone 3 is able to establish an RRC connection with the network (either via the same or a different cell), it provides the consecutive communication failure report to the network, either as part of the RRC connection establishment procedure or as part of a separate procedure, e.g. in response to a request by the E-UTRAN for reporting consecutive connection establishment failures.

As in this example the consecutive connection establishment failure is related to `Cell 1' operated by base station 5-1, the mobile telephone 3 will likely be able to establish an RRC connection via `Cell 2' operated by base station 5-2, and submit the consecutive communication failure report to base station 5-2.

In the following description, further details of a possible implementation of the configuration and provision of consecutive communication failure reporting are given.

In an example, if the mobile telephone 3 experiences a consecutive communication failure (e.g. consecutive RRC connection request failure) in a cell, it logs the details of the consecutive communication failure for later reporting to the network. In this example, the report to be sent to the network includes the following information:
- the number of consecutive RRC connection request failures; and
- if reception of all related Random Access Responses were unsuccessful.

The mobile telephone 3 stores the logged information for subsequent sending to the network via a base station 5 with which the mobile telephone 3 is able to establish an RRC connection.

In another example, if the mobile telephone 3 experiences a consecutive communication failure (e.g. consecutive RRC connection request failure) in a cell it logs the details of the consecutive communication failure only if it also determines that all related Random Access Responses were unsuccessful. In this case, the report to be sent to the network includes the following information:
- the number of consecutive RRC connection request failures.

In other words, the report implicitly indicates to the network that all Random Access Responses related to the RRC connection request were unsuccessful.

Preferably, the logged information is sent to the network using one or more appropriately formatted signalling message adapted for the provision of information by the mobile telephone, e.g. a '*UE Information Response*' message (which may be sent, e.g. in step S411 of Figure 4). Such provision of information may be carried out in response to an appropriately formatted request by the network for collecting information from the mobile telephone 3 on communication establishment failures. For example, the request may include a '*UE Information Request*' message sent from a network node (e.g. a base station 5) to the mobile telephone 3 whilst the mobile telephone 3 is operating in an RRC active mode (e.g. in step S401 of Figure 4), even though the information to be collected is related to (a subsequent) establishment of an RRC connection with the network.

The signalling message sent by the mobile telephone 3 at S411 preferably includes one or more information elements (IEs), for example, on top of an IE branch suitable for reporting connection establishment failures (e.g. a "*Conn Est Fail Report*" IE branch). In this case, any of the following information elements may be used:
- an information element for informing the network about the occurrence of a consecutive connection establishment failure, such as a '*Consecutive conn Est Fail*' IE;
- an information element for informing the network about the number of experienced consecutive connection establishment failures, such as a '*Num of Consecutive conn Est Fail*' IE;
- an information element for informing the network about a failure of receiving a random access response, such as a '*RAR failure*' IE.

In another example, the signalling message sent by the mobile telephone 3 at S411 preferably includes one or more information elements (IEs) on top of an IE branch suitable for reporting consecutive connection establishment failures (e.g. a "*Consecutive conn Est Fail*" IE branch). In this case, any of the following information elements may be used (instead or in addition to any of the above mentioned IEs):
- an information element for identifying a cell in which the consecutive connection establishment failure occurred, such as a '*failed Cell Id*' IE;
- an information element for identifying a location (e.g. geographical location) of the mobile telephone 3 when it experienced the reported consecutive connection establishment failure issue, such as a '*location Info*' IE;
- an information element for identifying a measurement result (e.g. a received reference signal power level) associated with the cell in which the mobile telephone 3 experienced the reported consecutive connection establishment failure issue, such as a '*meas Result Failed Cell*' IE;
- an information element for identifying a measurement result (e.g. a received reference signal power level) associated with one or more neighbouring cell (e.g. a second best cell) other than the cell in which the mobile telephone 3 experienced the reported consecutive connection establishment failure issue, such as a '*meas Result Neigh Cells*' IE;
- an information element for informing the network whether or not a random access response has been detected, such as a '*RAR Detected*' IE.

### Procedures at the MAC layer

In addition to logging details of the above events, the MAC module 45 may advantageously also perform logging and reporting of various events occurring at the MAC layer.

For example, when receiving a random access response from the base station 5, if the MAC module 45 determines that the received random access response includes an identifier of a random access preamble matching the mobile telephone's 3 transmitted random access preamble (which indicates that the base station 5 has correctly received the sent random access preamble), it can reset its random access response reception failure counter. In other words, upon successful reception of a valid random access response for a previously sent random access preamble the MAC module 45 sets the value of its random access response reception failure counter to a predefined start value (for example, set RAR_RECEPTION_FAILURE_COUNTER=0 if counting up from zero; and set RAR_RECEPTION_FAILURE_COUNTER='MAX_Number' if counting down from the maximum number of allowed random access reception failures).

On the other hand, if the MAC module 45 determines that reception of a random access response was unsuccessful, it can advantageously increment its random access response reception failure counter by one, e.g. increase the value of the RAR_RECEPTION_FAILURE_COUNTER (e.g. until a predefined maximum value is reached), or decrease the counter value by one (e.g. until the counter reaches zero) in case of a countdown type of counter is used. This step generally corresponds to step S702 of Figure 7.

Further, the MAC module 45 may also perform logging and reporting of resetting the MAC layer communications.

For example, if a reset of the MAC module 45 is requested by higher layers (e.g. by the RRC layer), the MAC module 45 can check, whether or not the random access response reception failure counter has reached a predefined threshold value, e.g. a predefined maximum value (if counting up) or zero (if counting down). If the MAC module 45 determines that the random access response reception failure counter (e.g. RAR_RECEPTION_FAILURE_COUNTER) has reached the predefined threshold value, it logs (or informs the RRC module 47 to log) the consecutive random access response reception failure. Of course, a similar logging (or indication to higher layers) may also take place if the MAC layer is reset upon the random access response reception failure counter reaching the predefined threshold value (e.g. without the higher layer explicitly requesting such reset).

In another example, if a reset of the MAC module 45 is requested by higher layers (e.g. by the RRC layer) and if there is an on-going random access procedure, the MAC module 45 can check and indicate to the higher layers whether or not each random access response reception in this random access procedure have failed (so far). This indication may then be included in a consecutive communication failure report (e.g. that is sent at S411 by the RRC module 47 to the base station 5 with which the mobile telephone 3 subsequently establishes an RRC connection).

### Reselection to another cell

Advantageously, using the above described logging and possibly control configuration received from the network, the cell selection module 48 is able to select a different cell than the one in which the consecutive communication failure has been experienced. In order to do so, the following procedure may be followed by the mobile telephone 3.

In one example, upon expiry of the T300 time (e.g. at S606 of Figure 6), the mobile telephone 3 checks whether all of the following conditions are met:
- there were a given (e.g. threshold) number of consecutive RRC connection request failures in the same cell;
- each related random access response reception was unsuccessful;
- only "0" backoff indicator or no backoff indicator was received.

If the mobile telephone 3 finds that the above conditions are met, it determines that cell reselection to the second best cell is allowed for the next cell selection procedure. Therefore, the cell selection module 48 selects the second best cell (e.g. a cell having the next strongest signal after the current cell being affected by the consecutive communication failure) for establishing an RRC connection. Further, the cell selection module 48 will consider the current cell barred (at least until further configuration is received from the network or the other modules of the mobile telephone 3).

In another example, upon expiry of the T300 time at S606, the mobile telephone 3 checks whether all of the following conditions are met:
- there were a given (e.g. threshold) number of consecutive RRC connection request failures in the same cell;
- each related random access response reception was unsuccessful;
- cell reselection to second best cell is allowed (e.g. a "cell reselection to second best cell" indicator was set to 'true' in each received random access response).

If the mobile telephone 3 finds that the above conditions are met, it determines that cell reselection to the second best cell is allowed. Therefore, the cell selection module 48 considers the current cell barred and selects the second best cell for establishing an RRC connection, e.g. as discussed above with reference to step S504 of Figure 4.

### Modifications and Alternatives

Detailed embodiments have been described above. As those skilled in the art will appreciate, a number of modifications and alternatives can be made to the above embodiments whilst still benefiting from the inventions embodied therein.

In the above examples, the network determines whether or not the consecutive communication failure issue is caused by geographic and/or environmentally induced communication imbalance (adverse signal propagation conditions) in the affected cell. For example, the base station/E-UTRAN may determine that the cause of the consecutive communication (connection request) failure is due to such geographic and/or environmentally induced communication imbalance in a reported cell (e.g. rather than congestion), when the following conditions are met:
- a consecutive RA failure report has been received for the cell;
- no congestion is observed on the PRACH for the reported cell; and
- the location of the reporting mobile telephone is far away from the reported cell (e.g. the mobile telephone is at a greater distance from the base station's transceiver than a predefined threshold distance).

In the above examples, the mobile telephone experiences a consecutive communication failure issue caused by geographic/environmentally induced communication imbalance in the cell denoted `Cell 1' operated by base station 5-1 (eNB-1) and does not experience such issue in the cell denoted `Cell 2' operated by base station 5-2 (eNB-2). In this case, the following communication may take place between the network nodes (as already discussed above with reference to Figure 5):
Option A: eNB-2 receives the report related to eNB-1/Cell 1 from the mobile telephone, and forwards the report to eNB-1 (e.g. over the X2 interface between them). In this case, eNB-1 can determine whether or not there is a geographic/environmentally induced communication imbalance in 'Cell 1'.

Option B: the MDT server receives the report related to eNB-1/Cell 1 and forwards the report to eNB-1. In this case eNB-1 can determine whether or not there is a geographic/environmentally induced communication imbalance in `Cell 1'.

Option C: the MDT server receives the report related to eNB-1/Cell 1, and also receives information on a congestion level for Cell 1 (e.g. a PRACH logging report from eNB-1). In this case the MDT server can determine whether or not there is a geographic/environmentally induced communication imbalance in `Cell 1'. If the MDT server determines that there is a geographic/environmentally induced communication imbalance in `Cell 1', it can notify eNB-1 operating Cell 1.

In the above embodiments, the mobile telephone provides information relating to a consecutive communication failure upon request by the network (e.g. following an MDT procedure, such as a procedure based on appropriately formatted '*UE Information Request*' / '*UE Information Response*' signalling messages with a network entity). However, it will also be appreciated that the mobile telephone may provide such indication even without such a network originated request. For example, the mobile telephone may autonomously provide to the network such information relating to a consecutive communication failure (e.g. based on a factory/operator configuration stored in a non-volatile memory of the mobile telephone).

Whilst the signalling messages described herein that include information relating to a consecutive communication failure are advantageous in terms of simplicity, ease of implementation and minimising the number of messages required, this information may be sent in any of a number of different ways, e.g. in multiple messages. Moreover, instead of modifying the described signalling messages, completely new messages may be generated which include the measurement results.

In the above embodiments, the term consecutive communication failure is used to refer to multiple communication failures experienced by a single mobile telephone whilst repeatedly attempting to establish a connection to the same cell of the network. However, it will also be appreciated that the term consecutive communication failure may also refer to a single communication failure from the mobile telephone's point of view. In this case, a series of communication failures may be reported by a plurality of mobile telephones for the same cell (hence from the network's point of view the communication failures occur consecutively in the affected cell) even if some or all of the mobile telephones experience the communication failure only once.

In the above embodiments, a mobile telephone based telecommunication system was described. As those skilled in the art will appreciate, the signalling techniques described in the present application can be employed in other communication system. Other communication nodes or devices may include user devices such as, for example, personal digital assistants, laptop computers, web browsers, Machine-to-Machine (M2M) communication devices (e.g. telemetry devices), etc. As those skilled in the art will appreciate, it is not essential that the above described system be used for mobile communication devices. The system can be used in a network having one or more fixed computing devices as well as or instead of the mobile communicating devices.

In the above description, the base station and the mobile telephone are described, for ease of understanding, as having a number of discrete modules. Whilst these modules may be provided in this way for certain applications, for example where an existing system has been modified to implement the invention, in other applications, for example in systems designed with the inventive features in mind from the outset, these modules may be built into the overall operating system or code and so these modules may not be discernible as discrete entities. These modules may also be implemented in software, hardware, firmware or a mix of these.

In the embodiments described above, the mobile telephone and the base station will include transceiver circuitry. Typically this circuitry will be formed by dedicated hardware circuits. However, in some embodiments, part of the transceiver circuitry may be implemented as software run by the corresponding controller.

In the above embodiments, a number of software modules were described. As those skilled in the art will appreciate, the software modules may be provided in compiled or un-compiled form and may be supplied to the base station or the relay station as a signal over a computer network, or on a recording medium. Further, the functionality performed by part or all of this software may be performed using one or more dedicated hardware circuits.

Various other modifications will be apparent to those skilled in the art and will not be described in further detail here.

## Claims

1. A communication device (3) for use in a communication system (1) in which a base station (5) operates a cell that is selectable by the communication device (3) in a region where connection attempts by the communication device (3) to the base station (5) operating that cell are at risk of failure, the communication device (3) comprising:
means (48) for selecting said cell when said communication device (3) is in said region where connection attempts by the communication device (3) to said base station (5) operating that cell are at risk of failure;
means (45) for attempting, within said region, to initiate a connection with said base station (5) that operates said cell when said cell has been selected;
means (47) for identifying that consecutive failures have occurred in respective attempts to initiate said connection;
means (49) for logging information identifying that consecutive failures in said respective attempts to initiate said connection have occurred; and
means (49) for transmitting, at a reporting opportunity, a report including said information identifying that consecutive failures in said respective attempts to initiate said connection have occurred, wherein said report is selectable from:
a) a report for said base station (5-1), transmitted via a further base station (5-2), for use by said base station (5-1) in identifying a cause of said consecutive failures in said respective attempts;
b) a report for a server (11) coupled to said base station (5-1), transmitted via a further base station (5-2), for use by said the server (11) in identifying a cause of said consecutive failures in said respective attempts and for notifying said cause to said base station (5-1); and
c) a report for said base station (5-1), transmitted via a further base station (5-2) and a server (11) coupled to said base station (5-1), for use by said base station (5-1) in identifying a cause of said consecutive failures in said respective attempts, and
wherein the logging information includes information indicating a number of consecutive Radio Resource Control, RRC, connection request failures and information indicating if reception of all related Random Access Responses were unsuccessful.

2. The communication device (3) of claim 1 further comprising means (49) for receiving, from a base station (5), configuration data for configuring the communication device (3) to log information identifying that consecutive failures in respective attempts to initiate said connection have occurred.

3. The communication device (3) of claim 2 wherein said receiving means (49) is operable to receive said configuration data using at least one signalling message.

4. The communication device (3) of claim 3 wherein said at least one signalling message comprises at least one `UE Information Request' message.

5. The communication device (3) of any of claims 1 to 4 wherein said selecting means (48) is operable to consider said at least one selected cell to be barred from at least one subsequent (re)selection when said identifying means (47) identifies consecutive failures in respective attempts to initiate said connection.

6. The communication device (3) of any of claims 1 to 5 wherein said region where connection attempts by the communication device (3) to the base station (5) operating that cell are at risk of failure comprises a region in which downlink signals from said base station (5) are stronger than downlink signals from other base stations but in which uplink signals from said communication device (3) cannot be successfully received by said base station (5).

7. A base station (5) for use in a communication system (1) in which the or another base station (5) operates a cell that is selectable by a communication device (3) in a region where connection attempts by the communication device (3) to the base station (5) operating that cell are at risk of failure, the base station (5) comprising:
means (65) for establishing a connection with a communication device (3) via a cell operated by said base station (5);
means (68) for sending information to said communication device (3), using said established connection, for configuring said communication device (3) for logging information identifying that consecutive failures in respective attempts to initiate a connection with the or another base station (5) of said communication system (1) have occurred;
means (68) for receiving, from the communication device (3), a report including said information identifying that consecutive failures in said respective attempts to initiate said connection have occurred; and
means (68) for identifying, based on said report, a cause of said consecutive failures in said respective attempts, **characterised in that** said report is selectable from:
a) a report transmitted via a further base station (5-2), for use by said base station (5-1) in identifying a cause of said consecutive failures in said respective attempts;
b) a report for a server (11) coupled to said base station (5-1), transmitted by the communication device (3) via a further base station (5-2), for use by said the server (11) in identifying a cause of said consecutive failures in said respective attempts and for notifying said cause to said base station (5-1); and
c) a report transmitted via a further base station (5-2) and a server (11) coupled to said base station (5-1), for use by said base station (5-1) in identifying a cause of said consecutive failures in said respective attempts, and
wherein the logging information includes information indicating a number of consecutive Radio Resource Control, RRC, connection request failures and information indicating if reception of all related Random Access Responses were unsuccessful.

8. The base station (5) of claim 7 wherein said receiving means (68) is operable to receive said information identifying that consecutive failures in said respective attempts to initiate said connection have occurred using at least one signalling message.

9. The base station (5) of claim 8 wherein said at least one signalling message comprises at least one `UE Information Response' message.

10. The base station (5) of claim 8 or 9 wherein said at least one signalling message comprises at least one information element (IE).

11. The base station (5) of claim 10 wherein said at least one information element comprises at least one of: an information element for indicating that a consecutive connection establishment failure has occurred (e.g. a 'Consecutive Conn Est Fail' IE), an information element for indicating the number of consecutive connection establishment failures that has occurred, (e.g. a 'Num of Consecutive Conn Est Fail' IE); and an information element for indicating that a random access response failure has occurred (e.g. a `RAR failure' IE).

12. The base station (5) of any of claims 7 to 11 wherein said information identifying that consecutive failures in said respective attempts to initiate said connection have occurred comprises information identifying at least one of: information identifying a cell selected by said communication device (3), information identifying a geographical location of said communication device (3); information identifying a time when said consecutive failures in said respective attempts to initiate said connection have occurred; information identifying a signal strength of said selected cell; information identifying a signal strength of at least one neighbour cell; and information identifying that a random access response has been detected.

13. The base station (5) of any of claims 7 to 12 wherein said sending means (68) is operable to send information to said communication device (3) for configuring said communication device (3) for logging information identifying that consecutive failures in attempting to establish a Radio Resource Control, RRC, and/or a Media Access Control, MAC, connection has occurred.

14. A communication system (1) comprising a communication device (3) according to any of claims 1 to 6 and a base station (5) according to any of claims 7 to 13.

15. A method performed by a communication device (3) in a communication system (1) in which a base station (5) operates a cell that is selectable by the communication device (3) in a region where connection attempts by the communication device (3) to the base station (5) operating that cell are at risk of failure, the method comprising:
selecting (s404) said cell when said communication device (3) is in said region where connection attempts by the communication device (3) to said base station (5) operating that cell are at risk of failure;
attempting (s405), within said region, to initiate a connection with said base station (5) that operates said cell when said cell has been selected;
identifying (s406) that consecutive failures have occurred in respective attempts to initiate said connection;
logging (s406) information identifying that consecutive failures in said respective attempts to initiate said connection have occurred; and
transmitting (s411), at a reporting opportunity, a report including said information identifying that consecutive failures in said respective attempts to initiate said connection have occurred, wherein said report is selectable from:
a) a report for said base station (5-1), transmitted via a further base station (5-2), for use by said base station (5-1) in identifying a cause of said consecutive failures in said respective attempts;
b) a report for a server (11) coupled to said base station (5-1), transmitted via a further base station (5-2), for use by said the server (11) in identifying a cause of said consecutive failures in said respective attempts and for notifying said cause to said base station (5-1); and
c) a report for said base station (5-1), transmitted via a further base station (5-2) and a server (11) coupled to said base station (5-1), for use by said base station (5-1) in identifying a cause of said consecutive failures in said respective attempts, and
wherein the logging information includes information indicating a number of consecutive Radio Resource Control, RRC, connection request failures and information indicating if reception of all related Random Access Responses were unsuccessful.

16. A method performed by a base station (5) in a communication system (1) in which the or another base station (5) operates a cell that is selectable by a communication device (3) in a region where connection attempts by the communication device (3) to the base station (5) operating that cell are at risk of failure, the method comprising:
establishing (s400) a connection with a communication device (3) via a cell operated by said base station (5);
sending (s401) information to said communication device (3), using said established connection, for configuring said communication device (3) for logging information identifying that consecutive failures in respective attempts to initiate a connection with the or another base station (5) of said communication system (1) have occurred;
receiving (s411), from the communication device (3), a report including said information identifying that consecutive failures in said respective attempts to initiate said connection have occurred; and
identifying (s502a, s503b, s502c), based on said report, a cause of said consecutive failures in said respective attempts, wherein said report is selectable from:
a) a report transmitted via a further base station (5-2), for use by said base station (5-1) in identifying a cause of said consecutive failures in said respective attempts;
b) a report for a server (11) coupled to said base station (5-1), transmitted by the communication device (3) via a further base station (5-2), for use by said the server (11) in identifying a cause of said consecutive failures in said respective attempts and for notifying said cause to said base station (5-1); and
c) a report transmitted via a further base station (5-2) and a server (11) coupled to said base station (5-1), for use by said base station (5-1) in identifying a cause of said consecutive failures in said respective attempts, and
wherein the logging information includes information indicating a number of consecutive Radio Resource Control, RRC, connection request failures and information indicating if reception of all related Random Access Responses were unsuccessful.

17. A computer implementable instructions product comprising computer implementable instructions for causing a programmable communications device to perform the method of claim 15 or 16.

## Patentansprüche

1. Kommunikationsvorrichtung (3) zur Verwendung in einem Kommunikationssystem (1), in dem eine Basisstation (5) eine Zelle betreibt, die durch die Kommunikationsvorrichtung (3) in einem Bereich auswählbar ist, in dem Verbindungsversuche durch die Kommunikationsvorrichtung (3) zu der Basisstation (5), die diese Zelle betreibt, einem Fehlschlagrisiko ausgesetzt sind, wobei die Kommunikationsvorrichtung (3) aufweist:
eine Einrichtung (48) zum Auswählen der Zelle, wenn sich die Kommunikationsvorrichtung (3) in dem Bereich befindet, in dem Verbindungsversuche durch die Kommunikationsvorrichtung (3) zu der Basisstation (5), die diese Zelle betreibt, einem Fehlschlagrisiko ausgesetzt sind;
eine Einrichtung (45) zum Versuchen, innerhalb des Bereichs eine Verbindung mit der Basisstation (5), die die Zelle betreibt, aufzubauen, wenn die Zelle ausgewählt worden ist;
eine Einrichtung (47) zum Identifizieren, dass aufeinanderfolgende Fehlschläge bei jeweiligen Versuchen, die Verbindung aufzubauen, aufgetreten sind;
eine Einrichtung (49) zum Protokollieren von Information, die anzeigt, dass aufeinanderfolgende Fehlschläge in den jeweiligen Versuchen, die Verbindung aufzubauen, aufgetreten sind; und
eine Einrichtung (49) zum Übertragen eines Berichts, der die Information enthält, die anzeigt, dass aufeinanderfolgende Fehlschläge in den jeweiligen Versuchen, die Verbindung aufzubauen, aufgetreten sind, bei einer Gelegenheit für eine Berichterstattung, wobei der Bericht auswählbar ist aus:
a) einem Bericht für die Basisstation (5-1), der über eine weitere Basisstation (5-2) übertragen wird, zur Verwendung durch die Basisstation (5-1) bei der Identifizierung einer Ursache für die aufeinanderfolgenden Fehlschläge in den jeweiligen Versuchen;
b) einem Bericht für einen mit der Basisstation (5-1) gekoppelten Server (11), der über eine weitere Basisstation (5-2) übertragen wird, zur Verwendung durch den Server (11) bei der Identifizierung einer Ursache der aufeinanderfolgenden Fehlschläge in den jeweiligen Versuchen und zum Benachrichtigen der Basisstation (5-1) über die Ursache; und
c) einem Bericht für die Basisstation (5-1), der über eine weitere Basisstation (5-2) und einen mit der Basisstation (5-1) gekoppelten Server (11) übertragen wird, zur Verwendung durch die Basisstation (5-1) bei der Identifizierung einer Ursache der aufeinanderfolgenden Fehlschläge in den jeweiligen Versuchen, und
wobei die Protokollierungsinformation Information enthält, die eine Anzahl aufeinanderfolgender Fehlschläge einer Funkressourcensteuerung, RRC, Verbindungsanforderung anzeigt, und Information, die anzeigt, ob der Empfang aller zugehörigen Random Access Responses erfolglos war.

2. Kommunikationsvorrichtung (3) nach Anspruch 1, ferner mit einer Einrichtung (49) zum Empfangen von Konfigurationsdaten von einer Basisstation (5) zum Konfigurieren der Kommunikationsvorrichtung (3) derart, dass sie Information protokolliert, die anzeigt, dass aufeinanderfolgende Fehlschläge in jeweiligen Versuchen, die Verbindung aufzubauen, aufgetreten sind.

3. Kommunikationsvorrichtung (3) nach Anspruch 2, wobei die Empfangseinrichtung (49) dafür betreibbar ist, die Konfigurationsdaten unter Verwendung mindestens einer Signalisierungsnachricht zu empfangen.

4. Kommunikationsvorrichtung (3) nach Anspruch 3, wobei die mindestens eine Signalisierungsnachricht mindestens eine "UE Information Request"-Nachricht enthält.

5. Kommunikationsvorrichtung (3) nach einem der Ansprüche 1 bis 4, wobei die Auswahleinrichtung (48) dafür betreibbar ist, die mindestens eine ausgewählte Zelle als von mindestens einer nachfolgenden (Neu-)Auswahl ausgeschlossen zu betrachten, wenn die Identifizierungseinrichtung (47) aufeinanderfolgende Fehlschläge in jeweiligen Versuchen, die Verbindung aufzubauen, identifiziert.

6. Kommunikationsvorrichtung (3) nach einem der Ansprüche 1 bis 5, wobei der Bereich, in dem Verbindungsversuche der Kommunikationsvorrichtung (3) zu der Basisstation (5), die diese Zelle betreibt, einem Fehlschlagrisiko ausgesetzt sind, einen Bereich enthält, in dem Downlink-Signale von der Basisstation (5) stärker sind als Downlink-Signale von anderen Basisstationen, aber in denen Uplink-Signale von der Kommunikationsvorrichtung (3) durch die Basisstation (5) nicht erfolgreich empfangen werden können.

7. Basisstation (5) zur Verwendung in einem Kommunikationssystem (1), in dem die oder eine andere Basisstation (5) eine Zelle betreibt, die durch eine Kommunikationsvorrichtung (3) in einem Bereich auswählbar ist, in dem Verbindungsversuche durch die Kommunikationsvorrichtung (3) zur Basisstation (5), die diese Zelle betreibt, einem Fehlschlagrisiko ausgesetzt sind, wobei die Basisstation (5) aufweist:
eine Einrichtung (65) zum Einrichten einer Verbindung mit einer Kommunikationsvorrichtung (3) über eine durch die Basisstation (5) betriebene Zelle;
eine Einrichtung (68) zum Übertragen von Information an die Kommunikationsvorrichtung (3) unter Verwendung der eingerichteten Verbindung zum Konfigurieren der Kommunikationsvorrichtung (3) zum Protokollieren von Information, die anzeigt, dass aufeinanderfolgende Fehlschläge in entsprechenden Versuchen, eine Verbindung mit der oder einer anderen Basisstation (5) des Kommunikationssystems (1) aufzubauen, aufgetreten sind;
eine Einrichtung (68) zum Empfangen eines Berichts von der Kommunikationsvorrichtung (3), der die Information enthält, die anzeigt, dass aufeinanderfolgende Fehlschläge in den jeweiligen Versuchen, die Verbindung aufzubauen, aufgetreten sind; und
eine Einrichtung (68) zum Identifizieren einer Ursache der aufeinanderfolgenden Fehlschläge in den jeweiligen Versuchen basierend auf dem Bericht,
**dadurch gekennzeichnet, dass** der Bericht auswählbar ist aus:
a) einem Bericht, der über eine weitere Basisstation (5-2) übertragen wird, zur Verwendung durch die Basisstation (5-1) beim Identifizieren einer Ursache für die aufeinanderfolgenden Fehlschläge in den jeweiligen Versuchen;
b) einem Bericht für einen mit der Basisstation (5-1) gekoppelten Server (11), der durch die Kommunikationsvorrichtung (3) über eine weitere Basisstation (5-2) übertragen wird, zur Verwendung durch den Server (11) beim Identifizieren einer Ursache der aufeinanderfolgenden Fehlschläge in den jeweiligen Versuchen und zum Informieren der Basisstation (5-1) über die Ursache; und
c) einem Bericht, der über eine weitere Basisstation (5-2) und einen mit der Basisstation (5-1) gekoppelten Server (11) übertragen wird, zur Verwendung durch die Basisstation (5-1) beim Identifizieren einer Ursache der aufeinanderfolgenden Fehlschläge in den jeweiligen Versuchen, und
wobei die Protokollierungsinformation Information, die eine Anzahl aufeinanderfolgender Fehlschläge einer Funkressourcensteuerung, RRC-Verbindungsanforderung anzeigt, und Information enthält, die anzeigt, ob der Empfang aller zugehörigen Random Access Responses erfolglos war.

8. Basisstation (5) nach Anspruch 7, wobei die Empfangseinrichtung (68) dafür betreibbar ist, die Information, die anzeigt, dass aufeinanderfolgende Fehlschläge in den jeweiligen Versuchen, die Verbindung aufzubauen, aufgetreten sind, unter Verwendung mindestens einer Signalisierungsnachricht zu empfangen.

9. Basisstation (5) nach Anspruch 8, wobei die mindestens eine Signalisierungsnachricht mindestens eine 'UE Information Response'-Nachricht aufweist.

10. Basisstation (5) nach Anspruch 8 oder 9, wobei die mindestens eine Signalisierungsnachricht mindestens ein Informationselement (IE) enthält.

11. Basisstation (5) nach Anspruch 10, wobei das mindestens eine Informationselement mindestens eines der folgenden Elemente aufweist: ein Informationselement zum Anzeigen, dass aufeinanderfolgende Verbindungsaufbaufehlschläge aufgetreten sind (z.B. ein 'Consecutive Conn Est Fail'-IE), ein Informationselement zum Anzeigen der Anzahl der aufgetretenen aufeinanderfolgenden Verbindungsaufbaufehlschläge (z.B. ein 'Num of Consecutive Conn Est Fail'-IE), und ein Informationselement zum Anzeigen, dass ein Random-Access-Response-Fehlschlag aufgetreten ist (z.B. ein 'RAR Failure'-IE).

12. Basisstation (5) nach einem der Ansprüche 7 bis 11, wobei die Information, die anzeigt, dass aufeinanderfolgende Fehlschläge in den jeweiligen Versuchen, die Verbindung aufzubauen, aufgetreten sind, Information aufweist, die mindestens eines der folgenden Elemente anzeigt: Information, die eine durch die Kommunikationsvorrichtung (3) ausgewählte Zelle anzeigt; Information, die einen geographischen Standort der Kommunikationsvorrichtung (3) anzeigt; Information, die eine Zeit anzeigt, zu der die aufeinanderfolgenden Fehlschläge in den jeweiligen Versuchen, die Verbindung aufzubauen, aufgetreten sind; Information, die eine Signalstärke der ausgewählten Zelle anzeigt; Information, die eine Signalstärke mindestens einer Nachbarzelle anzeigt; und Information, die anzeigt, dass eine Random Access Response erfasst worden ist.

13. Basisstation (5) nach einem der Ansprüche 7 bis 12, wobei die Übertragungseinrichtung (68) dafür betreibbar ist, Information zum Konfigurieren der Kommunikationsvorrichtung (3) derart, dass sie Information protokolliert, die anzeigt, dass aufeinanderfolgende Fehlschläge bei dem Versuch, eine Funkressourcensteuerung, RRC-, Verbindung und/oder eine, Media Access Control, MAC-, Verbindung herzustellen, aufgetreten sind, an die Kommunikationsvorrichtung (3) zu übertragen.

14. Kommunikationssystem (1) mit einer Kommunikationsvorrichtung (3) nach einem der Ansprüche 1 bis 6 und einer Basisstation (5) nach einem der Ansprüche 7 bis 13.

15. Verfahren, das durch eine Kommunikationsvorrichtung (3) in einem Kommunikationssystem (1) ausgeführt wird, in dem eine Basisstation (5) eine Zelle betreibt, die durch die Kommunikationsvorrichtung (3) in einem Bereich auswählbar ist, in dem Verbindungsversuche durch die Kommunikationsvorrichtung (3) zur Basisstation (5), die diese Zelle betreibt, einem Fehlschlagrisiko ausgesetzt sind, wobei das Verfahren die Schritte aufweist:
Auswählen (s404) der Zelle, wenn sich die Kommunikationsvorrichtung (3) in dem Bereich befindet, in dem Verbindungsversuche durch die Kommunikationsvorrichtung (3) zu der Basisstation (5), die diese Zelle betreibt, einem Fehlschlagrisiko ausgesetzt sind;
Versuchen (s405), innerhalb des Bereichs eine Verbindung mit der Basisstation (5), die die Zelle betreibt, aufzubauen, wenn die Zelle ausgewählt worden ist;
Identifizieren (s406), dass aufeinanderfolgende Fehlschläge in jeweiligen Versuchen, die Verbindung aufzubauen, aufgetreten sind;
Protokollieren (s406) von Information, die anzeigt, dass aufeinanderfolgende Fehlschläge in den jeweiligen Versuchen, die Verbindung aufzubauen, aufgetreten sind; und
Übertragen (s411) eines Berichts, der die Information enthält, die anzeigt, dass aufeinanderfolgende Fehlschläge in den jeweiligen Versuchen, die Verbindung aufzubauen, aufgetreten sind, bei einer Gelegenheit für eine Berichterstattung, wobei der Bericht auswählbar ist aus:
a) einem Bericht für die Basisstation (5-1), der über eine weitere Basisstation (5-2) übertragen wird, zur Verwendung durch die Basisstation (5-1) beim Identifizieren einer Ursache der aufeinanderfolgenden Fehlschläge in den jeweiligen Versuchen;
b) einem Bericht für einen mit der Basisstation (5-1) gekoppelten Server (11), der über eine weitere Basisstation (5-2) übertragen wird, zur Verwendung durch den Server (11) beim Identifizieren einer Ursache der aufeinanderfolgenden Fehlschläge in den jeweiligen Versuchen und zum Informieren der Basisstation (5-1) über die Ursache; und
c) einem Bericht für die Basisstation (5-1), der über eine weitere Basisstation (5-2) und einen mit der Basisstation (5-1) gekoppelten Server (11) übertragen wird, zur Verwendung durch die Basisstation (5-1) beim Identifizieren einer Ursache der aufeinanderfolgenden Fehlschläge in den jeweiligen Versuchen, und
wobei die Protokollierungsinformation Information, die eine Anzahl aufeinanderfolgender Fehlschläge einer, Funkressourcensteuerung, RRC-, Verbindungsanforderung anzeigt, und Information enthält, die anzeigt, ob der Empfang aller zugehörigen Random Access Responses erfolglos war.

16. Verfahren, das durch eine Basisstation (5) in einem Kommunikationssystem (1) ausgeführt wird, in dem die oder eine andere Basisstation (5) eine Zelle betreibt, die durch eine Kommunikationsvorrichtung (3) in einem Bereich auswählbar ist, in dem Verbindungsversuche durch die Kommunikationsvorrichtung (3) zur Basisstation (5), die diese Zelle betreibt, einem Fehlschlagrisiko ausgesetzt sind, wobei das Verfahren die Schritte aufweist:
Einrichten (s400) einer Verbindung mit einer Kommunikationsvorrichtung (3) über eine Zelle, die durch die Basisstation (5) betrieben wird;
Übertragen (s401) von Information an die Kommunikationsvorrichtung (3) unter Verwendung der eingerichteten Verbindung zum Konfigurieren der Kommunikationsvorrichtung (3) zum Protokollieren von Information, die anzeigt, dass aufeinanderfolgende Fehlschläge in entsprechenden Versuchen, eine Verbindung mit der oder einer anderen Basisstation (5) des Kommunikationssystems (1) aufzubauen, aufgetreten sind;
Empfangen (s411) eines Berichts von der Kommunikationsvorrichtung (3), der die Information enthält, die anzeigt, dass aufeinanderfolgende Fehlschläge in den jeweiligen Versuchen, die Verbindung aufzubauen, aufgetreten sind; und
Identifizieren (s502a, s502b, s502c) einer Ursache der aufeinanderfolgenden Fehlschläge in den jeweiligen Versuchen basierend auf dem Bericht, wobei der Bericht auswählbar ist aus:
a) einem Bericht, der über eine weitere Basisstation (5-2) übertragen wird, zur Verwendung durch die Basisstation (5-1) beim Identifizieren einer Ursache der aufeinanderfolgenden Fehlschläge in den jeweiligen Versuchen;
b) einem Bericht für einen mit der Basisstation (5-1) gekoppelten Server (11), der durch die Kommunikationsvorrichtung (3) über eine weitere Basisstation (5-2) übertragen wird, zur Verwendung durch den Server (11) beim Identifizieren einer Ursache der aufeinanderfolgenden Fehlschläge in den jeweiligen Versuchen und zum Informieren der Basisstation (5-1) über die Ursache; und
c) einem Bericht, der über eine weitere Basisstation (5-2) und einen mit der Basisstation (5-1) gekoppelten Server (11) übertragen wird, zur Verwendung durch die Basisstation (5-1) beim Identifizieren einer Ursache der aufeinanderfolgenden Fehlschläge in den jeweiligen Versuchen, und
wobei die Protokollierungsinformation Information, die eine Anzahl aufeinanderfolgender Fehlschläge einer Funkressourcensteuerung, RRC-,Verbindungsanforderung anzeigt, und Information enthält, die anzeigt, ob der Empfang aller zugehörigen Random Access Responses erfolglos war.

17. Computerimplementierbares Befehlsprodukt, das computerimplementierbare Befehle enthält, die eine programmierbare Kommunikationsvorrichtung veranlassen, das Verfahren nach Anspruch 15 oder 16 auszuführen.

## Revendications

1. Dispositif de communication (3) pour une utilisation dans un système de communication (1) dans lequel une station de base (5) fait fonctionner une cellule qui est sélectionnable par le dispositif de communication (3) dans une région où des tentatives de connexion par le dispositif de communication (3) à la station de base (5) faisant fonctionner cette cellule risquent d'échouer, le dispositif de communication (3) comprenant:
un moyen (48) pour sélectionner ladite cellule lorsque ledit dispositif de communication (3) est dans ladite région où des tentatives de connexion par le dispositif de communication (3) à ladite station de base (5) faisant fonctionner cette cellule risquent d'échouer;
un moyen (45) pour tenter, dans ladite région, d'initier une connexion avec ladite station de base (5) qui fait fonctionner ladite cellule lorsque ladite cellule a été sélectionnée;
un moyen (47) pour identifier que des échecs consécutifs se sont produits dans des tentatives respectives pour initier ladite connexion;
un moyen (49) pour journaliser des informations identifiant que des échecs consécutifs dans lesdites tentatives respectives pour initier ladite connexion se sont produits; et
un moyen (49) pour transmettre, lors d'une opportunité de remise de rapport, un rapport comportant lesdites informations identifiant que des échecs consécutifs dans lesdites tentatives respectives pour initier ladite connexion se sont produits, dans lequel ledit rapport est sélectionnable parmi:
a) un rapport pour ladite station de base (5-1), transmis via une station de base (5-2) supplémentaire, pour une utilisation par ladite station de base (5-1) dans l'identification d'une cause desdits échecs consécutifs dans lesdites tentatives respectives;
b) un rapport pour un serveur (11) couplé à ladite station de base (5-1), transmis via une station de base (5-2) supplémentaire, pour une utilisation par ledit serveur (11) dans l'identification d'une cause desdits échecs consécutifs dans lesdites tentatives respectives et pour notifier ladite cause à ladite station de base (5-1); et
c) un rapport pour ladite station de base (5-1), transmis via une station de base (5-2) supplémentaire et un serveur (11) couplé à ladite station de base (5-1), pour une utilisation par ladite station de base (5-1) dans l'identification d'une cause desdits échecs consécutifs dans lesdites tentatives respectives, et
dans lequel les informations de journalisation comportent des informations indiquant un nombre d'échecs de requêtes de connexion de commande de ressources radio, RRC, consécutifs et des informations indiquant si la réception d'aucune réponse d'accès aléatoire liée n'a été un succès.

2. Dispositif de communication (3) selon la revendication 1 comprenant en outre un moyen (49) pour recevoir, à partir d'une station de base (5), des données de configuration pour configurer le dispositif de communication (3) pour journaliser des informations identifiant que des échecs consécutifs dans des tentatives respectives pour initier ladite connexion se sont produits.

3. Dispositif de communication (3) selon la revendication 2 dans lequel ledit moyen (49) de réception peut servir à recevoir lesdites données de configuration en utilisant au moins un message de signalisation.

4. Dispositif de communication (3) selon la revendication 3 dans lequel ledit au moins un message de signalisation comprend au moins un message « UE information Request ».

5. Dispositif de communication (3) selon l'une quelconque des revendications 1 à 4 dans lequel ledit moyen (48) de sélection peut servir à considérer ladite au moins une cellule sélectionnée comme exclue d'au moins une (re)sélection suivante lorsque ledit moyen (47) d'identification identifie des échecs consécutifs dans des tentatives respectives pour initier ladite connexion.

6. Dispositif de communication (3) selon l'une quelconque des revendications 1 à 5 dans lequel ladite région où des tentatives de connexion par le dispositif de communication (3) à la station de base (5) faisant fonctionner cette cellule risquent d'échouer comprend une région dans laquelle des signaux de liaison descendante provenant de ladite station de base (5) sont plus puissants que des signaux de liaison descendante provenant d'autres stations de base mais dans laquelle des signaux de liaison montante provenant dudit dispositif de communication (3) ne peuvent pas être reçus avec succès par ladite station de base (5).

7. Station de base (5) pour une utilisation dans un système de communication (1) dans lequel la ou une autre station de base (5) fait fonctionner une cellule qui est sélectionnable par un dispositif de communication (3) dans une région où des tentatives de connexion par le dispositif de communication (3) à la station de base (5) faisant fonctionner cette cellule risquent d'échouer, la station de base (5) comprenant:
un moyen (65) pour établir une connexion avec un dispositif de communication (3) via une cellule que fait fonctionner ladite station de base (5);
un moyen (68) pour envoyer des informations audit dispositif de communication (3), en utilisant ladite connexion établie, pour configurer ledit dispositif de communication (3) pour journaliser des informations identifiant que des échecs consécutifs dans des tentatives respectives pour initier une connexion à la ou une autre station de base (5) dudit système de communication (1) se sont produits;
un moyen (68) pour recevoir, à partir du dispositif de communication (3), un rapport comportant lesdites informations identifiant que des échecs consécutifs dans lesdites tentatives respectives pour initier ladite connexion se sont produits; et
un moyen (68) pour identifier, sur la base dudit rapport, une cause desdits échecs consécutifs dans lesdites tentatives respectives, **caractérisée en ce que** ledit rapport est sélectionnable parmi:
a) un rapport transmis via une station de base (5-2) supplémentaire, pour une utilisation par ladite station de base (5-1) dans l'identification d'une cause desdits échecs consécutifs dans lesdites tentatives respectives;
b) un rapport pour un serveur (11) couplé à ladite station de base (5-1), transmis par le dispositif de communication (3) via une station de base (5-2) supplémentaire, pour une utilisation par ledit serveur (11) dans l'identification d'une cause desdits échecs consécutifs dans lesdites tentatives respectives et pour notifier ladite cause à ladite station de base (5-1); et
c) un rapport transmis via une station de base (5-2) supplémentaire et un serveur (11) couplé à ladite station de base (5-1), pour une utilisation par ladite station de base (5-1) dans l'identification d'une cause desdits échecs consécutifs dans lesdites tentatives respectives, et
dans laquelle les informations de journalisation comportent des informations indiquant un nombre d'échecs de requêtes de connexion de commande de ressources radio, RRC, consécutifs et des informations indiquant si la réception d'aucune réponse d'accès aléatoire liée n'a été un succès.

8. Station de base (5) selon la revendication 7 dans laquelle ledit moyen (68) de réception peut servir à recevoir lesdites informations identifiant que des échecs consécutifs dans lesdites tentatives respectives pour initier ladite connexion se sont produits en utilisant au moins un message de signalisation.

9. Station de base (5) selon la revendication 8 dans laquelle ledit au moins un message de signalisation comprend au moins un message « UE Information Response ».

10. Station de base (5) selon la revendication 8 ou 9 dans laquelle ledit au moins un message de signalisation comprend au moins un élément d'information (IE).

11. Station de base (5) selon la revendication 10 dans laquelle ledit au moins un élément d'information comprend au moins un parmi: un élément d'information pour indiquer qu'un échec d'établissement de connexion consécutif s'est produit (par exemple un IE « Consecutive Conn Est Fail »), un élément d'information pour indiquer le nombre d'échecs d'établissement de connexion consécutifs qui se sont produits (par exemple un IE « Num of Consecutive Conn Est Fail »); et un élément d'information pour indiquer qu'un échec de réponse d'accès aléatoire s'est produit (par exemple un IE « RAR failure »).

12. Station de base (5) selon l'une quelconque des revendications 7 à 11 dans laquelle lesdites informations identifiant que des échecs consécutifs dans lesdites tentatives respectives pour initier ladite connexion se sont produits comprennent des informations identifiant au moins une parmi: des informations identifiant une cellule sélectionnée par ledit dispositif de communication (3), des informations identifiant un emplacement géographique dudit dispositif de communication (3); des informations identifiant un moment où lesdits échecs consécutifs dans lesdites tentatives respectives pour initier ladite connexion se sont produits; des informations identifiant une intensité de signal de ladite cellule sélectionnée; des informations identifiant une intensité de signal d'au moins une cellule voisine; et des informations identifiant qu'une réponse d'accès aléatoire a été détectée.

13. Station de base (5) selon l'une quelconque des revendications 7 à 12 dans laquelle ledit moyen (68) d'envoi peut servir à envoyer des informations audit dispositif de communication (3) pour configurer ledit dispositif de communication (3) pour journaliser des informations identifiant que des échecs consécutifs dans des tentatives pour établir une connexion de commande de ressources radio, RRC, et/ou de commande d'accès au support, MAC, se sont produits.

14. Système de communication (1) comprenant un dispositif de communication (3) selon l'une quelconque des revendications 1 à 6 et une station de base (5) selon l'une quelconque des revendications 7 à 13.

15. Procédé réalisé par un dispositif de communication (3) dans un système de communication (1) dans lequel une station de base (5) fait fonctionner une cellule qui est sélectionnable par le dispositif de communication (3) dans une région où des tentatives de connexion par le dispositif de communication (3) à la station de base (5) faisant fonctionner cette cellule risquent d'échouer, le procédé comprenant:
la sélection (s404) de ladite cellule lorsque ledit dispositif de communication (3) est dans ladite région où des tentatives de connexion par le dispositif de communication (3) à ladite station de base (5) faisant fonctionner cette cellule risquent d'échouer;
la tentative (s405), dans ladite région, pour initier une connexion avec ladite station de base (5) qui fait fonctionner ladite cellule lorsque ladite cellule a été sélectionnée;
l'identification (s406) que des échecs consécutifs se sont produits dans des tentatives respectives pour initier ladite connexion;
la journalisation (s406) d'informations identifiant que des échecs consécutifs dans lesdites tentatives respectives pour initier ladite connexion se sont produits; et
la transmission (s411), lors d'une opportunité de remise de rapport, d'un rapport comportant lesdites informations identifiant que des échecs consécutifs dans lesdites tentatives respectives pour initier ladite connexion se sont produits, dans lequel ledit rapport est sélectionnable parmi:
a) un rapport pour ladite station de base (5-1), transmis via une station de base (5-2) supplémentaire, pour une utilisation par ladite station de base (5-1) dans l'identification d'une cause desdits échecs consécutifs dans lesdites tentatives respectives;
b) un rapport pour un serveur (11) couplé à ladite station de base (5-1), transmis via une station de base (5-2) supplémentaire, pour une utilisation par ledit serveur (11) dans l'identification d'une cause desdits échecs consécutifs dans lesdites tentatives respectives et pour notifier ladite cause à ladite station de base (5-1); et
c) un rapport pour ladite station de base (5-1), transmis via une station de base (5-2) supplémentaire et un serveur (11) couplé à ladite station de base (5-1), pour une utilisation par ladite station de base (5-1) dans l'identification d'une cause desdits échecs consécutifs dans lesdites tentatives respectives, et
dans lequel les informations de journalisation comportent des informations indiquant un nombre d'échecs de requêtes de connexion de commande de ressources radio, RRC, consécutifs et des informations indiquant si la réception d'aucune réponse d'accès aléatoire liée n'a été un succès.

16. Procédé réalisé par une station de base (5) dans un système de communication (1) dans lequel la ou une autre station de base (5) fait fonctionner une cellule qui est sélectionnable par un dispositif de communication (3) dans une région où des tentatives de connexion par le dispositif de communication (3) à la station de base (5) faisant fonctionner cette cellule risquent d'échouer, le procédé comprenant:
l'établissement (s400) d'une connexion avec un dispositif de communication (3) via une cellule que fait fonctionner ladite station de base (5);
l'envoi (s401) d'informations audit dispositif de communication (3), en utilisant ladite connexion établie, pour configurer ledit dispositif de communication (3) pour journaliser des informations identifiant que des échecs consécutifs dans des tentatives respectives pour initier une connexion à la ou une autre station de base (5) dudit système de communication (1) se sont produits;
la réception (s411), à partir du dispositif de communication (3), d'un rapport comportant lesdites informations identifiant que des échecs consécutifs dans lesdites tentatives respectives pour initier ladite connexion se sont produits; et
l'identification (s502a, s503b, s502c), sur la base dudit rapport, d'une cause desdits échecs consécutifs dans lesdites tentatives respectives, dans lequel ledit rapport est sélectionnable parmi:
a) un rapport transmis via une station de base (5-2) supplémentaire, pour une utilisation par ladite station de base (5-1) dans l'identification d'une cause desdits échecs consécutifs dans lesdites tentatives respectives;
b) un rapport pour un serveur (11) couplé à ladite station de base (5-1), transmis par le dispositif de communication (3) via une station de base (5-2) supplémentaire, pour une utilisation par ledit serveur (11) dans l'identification d'une cause desdits échecs consécutifs dans lesdites tentatives respectives et pour notifier ladite cause à ladite station de base (5-1); et
c) un rapport transmis via une station de base (5-2) supplémentaire et un serveur (11) couplé à ladite station de base (5-1), pour une utilisation par ladite station de base (5-1) dans l'identification d'une cause desdits échecs consécutifs dans lesdites tentatives respectives, et
dans lequel les informations de journalisation comportent des informations indiquant un nombre d'échecs de requêtes de connexion de commande de ressources radio, RRC, consécutifs et des informations indiquant si la réception d'aucune réponse d'accès aléatoire liée n'a été un succès.

17. Produits d'instructions pouvant être mises en oeuvre par ordinateur comprenant des instructions pouvant être mises en oeuvre par ordinateur pour amener un dispositif de communications programmable à réaliser le procédé selon la revendication 15 ou 16.
